(19) Europäisches Patentamt / European Patent Office / Office européen des brevets

(11) **EP 4 395 431 A1**

(12) **EUROPEAN PATENT APPLICATION**
published in accordance with Art. 153(4) EPC

(43) Date of publication:
**03.07.2024 Bulletin 2024/27**

(21) Application number: **22874701.0**

(22) Date of filing: **20.09.2022**

(51) International Patent Classification (IPC):
**H04W 64/00** (2009.01)

(52) Cooperative Patent Classification (CPC):
**H04W 24/10; H04W 64/00**

(86) International application number:
**PCT/CN2022/119854**

(87) International publication number:
**WO 2023/051314 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 CN 202111155753**

(71) Applicant: **Huawei Technologies Co., Ltd.**
**Shenzhen, Guangdong 518129 (CN)**

(72) Inventor: **HUANG, Su**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND COMMUNICATION APPARATUS**

(57) This application provides a communication method and a communication apparatus. In comparison with an implementation in which a first device performs positioning based on measurement results corresponding to reference signals transmitted on a plurality of paths, a first measurement result sent to the first device is a measurement result corresponding to a first reference signal transmitted on a single path. In this way, interference of multipath transmission can be avoided in a process in which the first device performs positioning based on the first measurement result, and positioning accuracy is improved. In the method, the communication apparatus receives first request information from the first device, and the first request information is used to request to report the measurement result of the first reference signal. The communication apparatus measures the first reference signal transmitted on a first path, to obtain the first measurement result. The communication apparatus sends the first measurement result to the first device.

FIG. 2a

**Description**

This application claims priority to Chinese Patent Application No. 202111155753.6, filed with the China National Intellectual Property Administration on September 29, 2021 and entitled "COMMUNICATION METHOD AND COMMUNICATION APPARATUS", which is incorporated herein by reference in its entirety.

**TECHNICAL FIELD**

This application relates to the field of wireless technologies, and in particular, to a communication method and a communication apparatus.

**BACKGROUND**

In a mobile communication system, positioning is one of important functions. Current positioning technologies include an uplink positioning technology, a downlink positioning technology, and a combined uplink and downlink positioning technology. Positioning in a wireless communication technology may use an architecture that is controlled by a location management function (location management function, LMF) of a core network and that is assisted by an access network device and a terminal device.

Currently, in the architecture, the LMF exchanges, with one or more transmission reception points (transmission reception points, TRPs), a measurement result obtained by each TRP by measuring an uplink reference signal sent by the terminal device. In addition, the LMF exchanges, with the terminal device, a measurement result obtained by the terminal device by measuring a downlink reference signal sent by each TRP. Finally, the LMF implements positioning on the terminal device based on the measurement results sent by each TRP and the terminal device.

However, in actual application, because there are a plurality of transmission paths for transmission of a reference signal (an uplink reference signal and/or a downlink reference signal), a measurement result obtained based on the reference signal is easily interfered by the multipath transmission, and positioning accuracy is affected.

**SUMMARY**

This application provides a communication method and a communication apparatus. In comparison with an implementation in which a first device performs positioning based on measurement results corresponding to reference signals transmitted on a plurality of paths, a first measurement result sent to the first device is a measurement result corresponding to a first reference signal transmitted on a single path. In this way, interference of multipath transmission can be avoided in a process in which the first device performs positioning based on the first measurement result, and positioning accuracy is improved.

A first aspect of this application provides a communication method. The method is performed by a communication apparatus, the method is performed by some components (such as a processor, a chip, or a chip system) in the communication apparatus, or the method may be implemented by a logical module or software that can implement all or some functions of the communication apparatus. In the first aspect and possible implementations of the first aspect, an example in which the communication method is performed by the communication apparatus is used for description. In the method, the communication apparatus receives first request information from a first device, and the first request information is used to request to report a measurement result of a first reference signal. The communication apparatus measures the first reference signal transmitted on a first path, to obtain a first measurement result. The communication apparatus sends the first measurement result to the first device.

Based on the foregoing technical solution, after the communication apparatus receives, from the first device, the first request information used to request to report the measurement result of the first reference signal, the communication apparatus measures, based on the first request information, the first reference signal transmitted on the first path, to obtain the first measurement result, and sends the first measurement result to the first device. In other words, the first measurement result reported by the communication apparatus to the first device is the measurement result corresponding to the first reference signal transmitted on a single path. In comparison with an implementation in which a first device performs positioning based on measurement results corresponding to reference signals transmitted on a plurality of paths, the first measurement result sent to the first device is the measurement result corresponding to the first reference signal transmitted on the single path. In this way, interference of multipath transmission can be avoided in a process in which the first device performs positioning based on the first measurement result, and positioning accuracy is improved.

In this embodiment of this application, the first device is a device configured to perform positioning on a terminal device. For example, the first device may be a core network device, so that the core network device performs positioning on the terminal device. For another example, the first device may be an access network device, so that the access network performs ranging and positioning on the terminal device. For another example, the first device may be another terminal device in a sidelink (sidelink, SL), so that the another terminal device performs positioning on the terminal device. An example in which the first device is a core network device is used for description in the following descriptions. It may be understood that the core network device in the following descriptions may also be replaced with an access network device or another terminal device in a sidelink (sidelink, SL).

Optionally, when the first device is a core network device, the communication apparatus may be a terminal device or an access network device. For example, when the communication apparatus is a terminal device, the first reference signal is a downlink reference signal sent by an access network device to the terminal device. In other words, the first measurement result is a measurement result obtained by measuring the downlink reference signal by the terminal device. For another example, when the communication apparatus is a network device, the first reference signal is an uplink reference signal sent by a terminal device to the access network device. In other words, the first measurement result is a measurement result obtained by measuring the uplink reference signal by the access network device.

Optionally, the first measurement result is a reference signal received power (reference signal received power, RSRP) or reference signal received quality (reference signal received quality, RSRQ).

Optionally, the first measurement result may also be expressed as a first measurement value, a first measurement quantity, or the like.

In a possible implementation of the first aspect, the first measurement result is a power value obtained by performing, based on propagation delay information on the first path, frequency domain compensation processing and averaging processing on channel frequency response (channel frequency response) information of frequency domain resource information corresponding to the first reference signal.

Optionally, in this embodiment of this application, the propagation delay information may be a propagation delay, may be a value of the propagation delay, may be an index corresponding to the value of the propagation delay, may be an identifier corresponding to the value of the propagation delay, or may be other information associated with the propagation delay. This is not limited herein.

Optionally, in this embodiment of this application, the channel frequency response information (or first channel frequency response information and second channel frequency response information described later) may be a channel frequency response, may be a value of the channel frequency response, may be an index corresponding to the value of the channel frequency response, may be an identifier corresponding to the value of the channel frequency response, or may be other information associated with the channel frequency response. This is not limited herein.

In a possible implementation of the first aspect, that the communication apparatus measures the first reference signal transmitted on a first path, to obtain a first measurement result includes: The communication apparatus determines the propagation delay information of the first reference signal on the first path. The communication apparatus determines first channel frequency response information of the frequency domain resource information corresponding to the first reference signal. The communication apparatus performs frequency domain compensation processing on the first channel frequency response information based on the propagation delay information, to obtain second channel frequency response information. The communication apparatus performs averaging processing on the second channel frequency response information to obtain the first measurement result.

Optionally, in this embodiment of this application, the frequency domain resource information may be a frequency domain resource, may be a (bandwidth) value of the frequency domain resource, may be an index corresponding to the (bandwidth) value of the frequency domain resource, may be an identifier corresponding to the (bandwidth) value of the frequency domain resource, or may be other information associated with the frequency domain resource. This is not limited herein.

Optionally, that the communication apparatus performs averaging processing on the second channel frequency response information to obtain the first measurement result includes: The communication apparatus performs average processing and modular square processing on the second channel frequency response information to obtain the first measurement result. Optionally, the channel frequency response (channel frequency response) refers to a channel response on a specified frequency set. According to a basic communication theory, in a noise-free environment, frequency domain information of a received signal is equal to frequency domain information of a sent signal multiplying the channel frequency response.

Based on the foregoing technical solution, first configuration information used to configure the first reference signal includes the frequency domain resource information carrying the first reference signal, and the frequency domain resource information corresponds to a resource element (resource element, RE) set. However, there is a channel frequency response in the RE set. Therefore, in the implementation in which the first measurement result is the power value obtained by performing, based on the propagation delay information on the first path, frequency domain compensation processing and averaging processing on the channel frequency response information of the frequency domain resource information corresponding to the first reference signal, the first measurement result may be obtained by performing, based on the propagation delay information, compensation on the channel frequency response information of the frequency domain resource information corresponding to the first reference signal. In this way, interference caused by the propagation delay information corresponding to the first path to a measurement process is avoided to some extent, and accuracy of subsequent positioning performed by the first device based on the first measurement result is further improved.

In a possible implementation of the first aspect, the first measurement result satisfies:

$$First\ measurement\ result = \left| \frac{1}{|I|} \sum_{k \in I} H(k)\ exp(2\pi jk f_{scs} D) \right|^2,$$

where $I$ represents an index set of resource elements REs occupied by the frequency domain resource information, $|I|$ represents a quantity of elements in the set $I$, $k$ is an index of a resource element RE occupied by the frequency domain resource information, $H(k)$ represents channel frequency response information of the RE whose index value is $k$, j is a complex number unit, $f_{scs}$ is a subcarrier spacing, and $D$ represents the propagation delay information on the first path.

In a possible implementation of the first aspect, the first measurement result satisfies:

$$First\ measurement\ result = \left| \frac{1}{|I|} \sum_{k \in I} H(k)\ exp\left( \frac{2\pi jk D_s}{N} \right) \right|^2,$$

where $I$ represents an index set of resource elements REs occupied by the frequency domain resource information, $|I|$ represents a quantity of elements in the set $I$, $k$ is an index of a resource element RE occupied by the frequency domain resource information, $H(k)$ represents channel frequency response information of the RE whose index value is $k$, j is a complex number unit, $f_{scs}$ is a subcarrier spacing, $D_s$ represents a time domain sampling point corresponding to the propagation delay information on the first path, N is a quantity of fast Fourier transform (fast fourier transform, FFT) points, and $D_s$ is a real number.

In a possible implementation of the first aspect, the first reference signal is a reference signal received by a first receiver branch set, and the first receiver branch set includes one or more receiver branches in n receiver branches.

Alternatively, expression is as follows: That the communication apparatus measures the first reference signal transmitted on a first path, to obtain a first measurement result includes: The communication apparatus receives, on a first receiver branch set, the first reference signal transmitted on the first path, and the first receiver branch set includes one or more receiver branches in n receiver branches. The communication apparatus measures the first reference signal to obtain the first measurement result.

Based on the foregoing technical solution, when the communication apparatus includes a plurality of (namely, n) receiver branches, the first measurement result may be specifically a measurement result corresponding to the first reference signal that is transmitted on the first path and that is received by the communication apparatus on the first receiver branch set in the n receiver branches. In other words, the measurement result corresponding to the first reference signal that is transmitted on the first path and that is received by the communication apparatus on the first receiver branch set is determined as the first measurement result. Therefore, in comparison with an implementation in which a plurality of receiver branches in the communication apparatus may receive same reference signals transmitted on a plurality of paths and obtain a plurality of measurement results through measurement, the first measurement result determined by using the first reference signal that is transmitted on the first path and that is received by using a same receiver branch set (namely, the first receiver branch set) may reduce interference between different receiver branches in the communication apparatus to some extent, and further improve the accuracy of the subsequent positioning performed by the first device based on the first measurement result.

In a possible implementation of the first aspect, the first receiver branch set includes a plurality of receiver branches in the n receiver branches.

Optionally, that the first receiver branch set includes a plurality of receiver branches in the n receiver branches may be expressed as that the first receiver branch set includes a plurality of receiver branches, or may be expressed as that the first receiver branch set is a plurality of receiver branches.

In a possible implementation of the first aspect, the first measurement result is an average value of a plurality of measurement results obtained by measuring the first reference signal on the plurality of receiver branches.

Optionally, the average value of the plurality of measurement results may be specifically an average value obtained by performing weighted averaging on the plurality of measurement results, an average value obtained by performing geometric averaging on the plurality of measurement results, or an average value obtained in another manner. This is not limited herein.

Based on the foregoing technical solution, when the first receiver branch set includes the plurality of receiver branches in the n receiver branches, the first measurement result may be specifically an average value of the plurality of measurement results obtained by measuring the first reference signal on the plurality of receiver branches. In this way, the first measurement result may reflect receiving features of the plurality of receiver branches included in the first receiver branch set to some extent.

In a possible implementation of the first aspect, the first measurement result is an average value obtained by performing spatial filtering on a plurality of measurement results obtained by measuring the first reference signal on the plurality of receiver branches.

Based on the foregoing technical solution, when the first receiver branch set includes the plurality of receiver branches in the n receiver branches, the first measurement result may be specifically the average value obtained by performing spatial filtering on the plurality of measurement results of the first reference signal. Therefore, interference caused by another path to the first reference signal transmitted on the first path may be reduced by using a filtering processing process, and the accuracy of the subsequent positioning performed by the first device based on the first measurement result may be further improved.

In a possible implementation of the first aspect, the first receiver branch set includes a first receiver branch in the n receiver branches, and a quantity of receiver branches included in the first receiver branch is 1.

Optionally, that the first receiver branch set includes a first receiver branch in the n receiver branches may also be expressed as that the first receiver branch set includes a receiver branch, or may also be expressed as that the first receiver branch set is a receiver branch.

In a possible implementation of the first aspect, the first receiver branch is a receiver branch corresponding to a largest measurement result in n measurement results obtained by measuring a second reference signal on the n receiver branches.

Optionally, the second reference signal is a reference signal historically received by the communication apparatus.

Based on the foregoing technical solution, when the first receiver branch set includes one of the n receiver branches (namely, the first receiver branch), the first receiver branch may be specifically the receiver branch corresponding to the largest measurement result corresponding to another previously received reference signal (namely, the second reference signal) in the n receiver branches in the communication apparatus. Therefore, the first reference signal is received by a specified receiver branch determined by the communication apparatus based on receiving quality of another reference signal, so that receiving quality of the first reference signal may be improved to some extent, to obtain the first measurement result, and the accuracy of the subsequent positioning performed by the first device based on the first measurement result is further improved.

In a possible implementation of the first aspect, the first measurement result includes index information of the first receiver branch set.

In this embodiment of this application, the index information may be an index (index) of the first receiver branch set, may be an identifier (identifier, ID) of the first receiver branch set, or may be implemented in another manner. This is not limited herein.

Based on the foregoing technical solution, the first measurement result reported by the communication apparatus may further include the index information indicating the first receiver branch set, so that the first device determines, based on the index information, a receiver branch used by the communication apparatus to receive the first reference signal.

Optionally, the first measurement result is carried in a first message, and the first message further includes the index information. In addition, the index information is located in a location different from that of the first measurement result in the first message.

In a possible implementation of the first aspect, the first request information includes an identifier of the first path.

Based on the foregoing technical solution, the first request information sent by the first device may further include the identifier of the first path, so that the communication apparatus receives and measures a reference signal on the specified first path based on an indication of the first device.

A second aspect of this application provides a communication method. The method is performed by a first device, the method is performed by some components (such as a processor, a chip, or a chip system) in the first device, or the method may be implemented by a logical module or software that can implement all or some functions of the first device. In the first aspect and possible implementations of the first aspect, an example in which the communication method is performed by the first device is used for description. In the method, the first device sends first request information, and the first request information is used to request to report a measurement result of a first reference signal. The first device receives a first measurement result of the first reference signal transmitted on a first path.

Based on the foregoing technical solution, after the first device sends, to a communication apparatus, the first request information used to request to report the measurement result of the first reference signal, the first device receives the first measurement result that is of the first reference signal transmitted on the first path and that is sent by the terminal device. In other words, the first measurement result that is reported by the communication apparatus and that is received by the first device is the measurement result corresponding to the first reference signal transmitted on a single path. Then, the first device may perform positioning based on the first measurement result. In comparison with an implementation in which a first device performs positioning based on measurement results corresponding to reference signals transmitted on a plurality of paths, the first measurement result sent to the first device is the measurement result corresponding to the first reference signal transmitted on the single path. In this way, interference of multipath transmission can be avoided in a process in which the first device performs positioning based on the first measurement result, and positioning accuracy is improved.

In this embodiment of this application, the first device is a device configured to perform positioning on a terminal device. For example, the first device may be a core network device, so that the core network device performs positioning on the terminal device. For another example, the first device may be an access network device, so that the access network performs ranging and positioning on the terminal device. For another example, the first device may be another terminal device in a sidelink (sidelink, SL), so that the another terminal device performs positioning on the terminal device. An example in which the first device is a core network device is used for description in the following descriptions. It may be understood that the core network device in the following descriptions may also be replaced with an access network device or another terminal device in a sidelink (sidelink, SL).

Optionally, the communication apparatus may be a terminal device or an access network device.

Optionally, after the first device receives the first measurement result of the first reference signal transmitted on the first path, the first device may perform positioning on the terminal device based on the first measurement result. For example, when the communication apparatus is a terminal device, the first reference signal is a downlink reference signal sent by an access network device to the terminal device, and the first device may perform positioning on the terminal device based on the first measurement result corresponding to the downlink reference signal. For another example, when the communication apparatus is an access network device, the first reference signal is an uplink reference signal sent by a terminal device to the access network device, and the first device may perform positioning, based on the first measurement result corresponding to the uplink reference signal, on the terminal device that sends the uplink reference signal.

In a possible implementation of the second aspect, the first measurement result is a power value obtained by performing, based on propagation delay information on the first path, frequency domain compensation processing and averaging processing on channel frequency response information of frequency domain resource information corresponding to the first reference signal.

In a possible implementation of the second aspect, first configuration information used to configure the first reference signal includes the frequency domain resource information carrying the first reference signal, and the frequency domain resource information corresponds to a resource element (resource element, RE) set. However, there is a channel frequency response in the RE set. Therefore, in the implementation in which the first measurement result is the power value obtained by performing, based on the propagation delay information on the first path, frequency domain compensation processing and averaging processing on the channel frequency response information of the frequency domain resource information corresponding to the first reference signal, the first measurement result may be obtained by performing, based on the propagation delay information, compensation on the channel frequency response information of the frequency domain resource information corresponding to the first reference signal. In this way, interference caused by the propagation delay information corresponding to the first path to a measurement process is avoided to some extent, and accuracy of subsequent positioning performed by the first device based on the first measurement result is further improved.

In a possible implementation of the second aspect, the first measurement result satisfies:

$$First\ measurement\ result = \left| \frac{1}{|I|} \sum_{k \in I} H(k)\ exp(2\pi jk f_{scs} D) \right|^2,$$

where $I$ represents an index set of resource elements REs occupied by the frequency domain resource information, $|I|$ represents a quantity of elements in the set $I$, $k$ is an index of a resource element RE occupied by the frequency domain resource information, $H(k)$ represents channel frequency response information of the RE whose index value is $k$, j is a complex number unit, $f_{scs}$ is a subcarrier spacing, and $D$ represents the propagation delay information on the first path.

In a possible implementation of the second aspect, the first measurement result satisfies:

$$First\ measurement\ result = \left| \frac{1}{|I|} \sum_{k \in I} H(k)\ exp\left(\frac{2\pi jk D_s}{N}\right) \right|^2,$$

where *I* represents an index set of resource elements REs occupied by the frequency domain resource information, $|I|$ represents a quantity of elements in the set *I, k* is an index of a resource element RE occupied by the frequency domain resource information, $H(k)$ represents channel frequency response information of the RE whose index value is *k*, j is a complex number unit, $f_{scs}$ is a subcarrier spacing, $D_s$ represents a time domain sampling point corresponding to the propagation delay information on the first path, N is a quantity of FFT points, and $D_s$ is a real number.

In a possible implementation of the second aspect, the first measurement result is a measurement result of the first reference signal received on a first receiver branch set, and the first receiver branch set includes one or more receiver branches in n receiver branches.

Based on the foregoing technical solution, when the communication apparatus includes a plurality of (namely, n) receiver branches, the first measurement result may be specifically a measurement result corresponding to the first reference signal that is transmitted on the first path and that is received by the communication apparatus on the first receiver branch set in the n receiver branches. In other words, the measurement result corresponding to the first reference signal that is transmitted on the first path and that is received by the communication apparatus on the first receiver branch set is determined as the first measurement result. Therefore, in comparison with an implementation in which a plurality of receiver branches in the communication apparatus may receive same reference signals transmitted on a plurality of paths and obtain a plurality of measurement results through measurement, the first measurement result determined by using the first reference signal that is transmitted on the first path and that is received by using a same receiver branch set (namely, the first receiver branch set) may reduce interference between different receiver branches in the communication apparatus to some extent, and further improve the accuracy of the subsequent positioning performed by the first device based on the first measurement result.

In a possible implementation of the second aspect, the first receiver branch set includes a plurality of receiver branches in the n receiver branches.

In a possible implementation of the second aspect, the first measurement result is an average value of a plurality of measurement results obtained by measuring the first reference signal on the plurality of receiver branches in the n receiver branches.

Optionally, the average value of the plurality of measurement results may be specifically an average value obtained by performing weighted averaging on the plurality of measurement results, an average value obtained by performing geometric averaging on the plurality of measurement results, or an average value obtained in another manner. This is not limited herein.

Based on the foregoing technical solution, when the first receiver branch set includes the plurality of receiver branches in the n receiver branches, the first measurement result may be specifically an average value of the plurality of measurement results obtained by measuring the first reference signal on the plurality of receiver branches. In this way, the first measurement result may reflect receiving features of the plurality of receiver branches included in the first receiver branch set to some extent.

In a possible implementation of the second aspect, the first measurement result is an average value obtained by performing spatial filtering on a plurality of measurement results obtained by measuring the first reference signal on the plurality of receiver branches.

Based on the foregoing technical solution, when the first receiver branch set includes the plurality of receiver branches in the n receiver branches, the first measurement result may be specifically the average value obtained by performing spatial filtering on the plurality of measurement results of the first reference signal. Therefore, interference caused by another path to the first reference signal transmitted on the first path may be reduced by using a filtering processing process, and the accuracy of the subsequent positioning performed by the first device based on the first measurement result may be further improved.

In a possible implementation of the second aspect, the first receiver branch set includes a first receiver branch in the n receiver branches, and a quantity of receiver branches included in the first receiver branch is 1.

In a possible implementation of the second aspect, the first receiver branch is a receiver branch corresponding to a largest measurement result in n measurement results obtained by measuring a second reference signal on the n receiver branches.

Optionally, the second reference signal is a reference signal historically received by the communication apparatus.

Based on the foregoing technical solution, when the first receiver branch set includes one of the n receiver branches (namely, the first receiver branch), the first receiver branch may be specifically the receiver branch corresponding to the largest measurement result corresponding to another previously received reference signal (namely, the second reference signal) in the n receiver branches in the communication apparatus. Therefore, the first reference signal is received by a specified receiver branch determined by the communication apparatus based on receiving quality of another reference signal, so that receiving quality of the first reference signal may be improved to some extent, to obtain the first measurement result, and the accuracy of the subsequent positioning performed by the first device based on the first measurement result is further improved.

In a possible implementation of the second aspect, the first measurement result includes index information of the first receiver branch set.

Based on the foregoing technical solution, the first measurement result reported by the communication apparatus may further include the index information indicating the first receiver branch set, so that the first device determines, based on the index information, a receiver branch used by the communication apparatus to receive the first reference signal.

Optionally, the first measurement result is carried in a first message, and the first message further includes the index information. In addition, the index information is located in a location different from that of the first measurement result in the first message.

In a possible implementation of the second aspect, the first request information includes an identifier of the first path.

Based on the foregoing technical solution, the first request information sent by the first device may further include the identifier of the first path, so that the communication apparatus receives and measures a reference signal on the specified first path based on an indication of the first device.

A third aspect of this application provides a communication apparatus. The apparatus can implement the method in any one of the first aspect or the possible implementations of the first aspect. The apparatus includes a corresponding unit or module configured to perform the method. The unit or module included in the apparatus may be implemented in a software and/or hardware manner. For example, the apparatus may be a terminal device (or an access network device), the apparatus may be a component (for example, a processor, a chip, or a chip system) in the terminal device (or the access network device), or the apparatus may be a logical module or software that can implement all or some functions of the terminal device (or the access network device).

The communication apparatus includes a transceiver unit and a processing unit.

The transceiver unit is configured to receive first request information from a first device, where the first request information is used to request to report a measurement result of a first reference signal.

The processing unit is configured to measure the first reference signal transmitted on a first path, to obtain a first measurement result.

The transceiver unit is configured to send the first measurement result to the first device.

In a possible implementation of the third aspect, the first measurement result is a power value obtained by performing, based on propagation delay information on the first path, frequency domain compensation processing and averaging processing on channel frequency response information of frequency domain resource information corresponding to the first reference signal.

In a possible implementation of the third aspect, the processing unit is specifically configured to:

determine the propagation delay information of the first reference signal on the first path;
determine first channel frequency response information of the frequency domain resource information corresponding to the first reference signal;
perform frequency domain compensation processing on the first channel frequency response information based on the propagation delay information, to obtain second channel frequency response information; and
perform averaging processing on the second channel frequency response information to obtain the first measurement result.

In a possible implementation of the third aspect, the first measurement result satisfies:

$$First\ measurement\ result = \left| \frac{1}{|I|} \sum_{k \in I} H(k)\, exp(2\pi jk f_{scs} D) \right|^2 ,$$

where $I$ represents an index set of resource elements REs occupied by the frequency domain resource information, $|I|$ represents a quantity of elements in the set $I$, $k$ is an index of a resource element RE occupied by the frequency domain resource information, $H(k)$ represents channel frequency response information of the RE whose index value is $k$, j is a complex number unit, $f_{scs}$ is a subcarrier spacing, and $D$ represents the propagation delay information on the first path.

In a possible implementation of the third aspect, the first measurement result satisfies:

$$First\ measurement\ result = \left| \frac{1}{|I|} \sum_{k \in I} H(k)\, exp\left( \frac{2\pi jk D_s}{N} \right) \right|^2 ,$$

where *I* represents an index set of resource elements REs occupied by the frequency domain resource information, $|I|$ represents a quantity of elements in the set *I*, k is an index of a resource element RE occupied by the frequency domain resource information, $H(k)$ represents channel frequency response information of the RE whose index value is $k$, j is a complex number unit, $f_{scs}$ is a subcarrier spacing, $D_s$ represents a time domain sampling point corresponding to the propagation delay information on the first path, N is a quantity of FFT points, and $D_s$ is a real number.

In a possible implementation of the third aspect, the processing unit is specifically configured to:

receive, on a first receiver branch set, the first reference signal transmitted on the first path, where the first receiver branch set includes one or more receiver branches in n receiver branches; and

measure the first reference signal to obtain the first measurement result.

In a possible implementation of the third aspect, the first receiver branch set includes a plurality of receiver branches in the n receiver branches.

In a possible implementation of the third aspect, the first measurement result is an average value of a plurality of measurement results obtained by measuring the first reference signal on the plurality of receiver branches.

In a possible implementation of the third aspect, the first measurement result is an average value obtained by performing spatial filtering on a plurality of measurement results obtained by measuring the first reference signal on the plurality of receiver branches.

In a possible implementation of the third aspect, the first receiver branch set includes a first receiver branch in the n receiver branches, and a quantity of receiver branches included in the first receiver branch is 1.

In a possible implementation of the third aspect, the first receiver branch is a receiver branch corresponding to a largest measurement result in n measurement results obtained by measuring a second reference signal on the n receiver branches.

In a possible implementation of the third aspect, the first measurement result includes index information of the first receiver branch set.

In a possible implementation of the third aspect, the first request information includes an identifier of the first path.

A fourth aspect of this application provides a communication apparatus. The apparatus can implement the method in any one of the second aspect or the possible implementations of the second aspect. The apparatus includes a corresponding unit or module configured to perform the method. The unit or module included in the apparatus may be implemented in a software and/or hardware manner. For example, the apparatus may be a first device, the apparatus may be a component (for example, a processor, a chip, or a chip system) in the first device, or the apparatus may be a logical module or software that can implement all or some functions of the first device.

The communication apparatus includes a sending unit and a receiving unit.

The sending unit is configured to send first request information, where the first request information is used to request to report a measurement result of a first reference signal.

The receiving unit is configured to receive a first measurement result of the first reference signal transmitted on a first path.

In a possible implementation of the fourth aspect, the first measurement result is a power value obtained by performing, based on propagation delay information on the first path, frequency domain compensation processing and averaging processing on channel frequency response information of frequency domain resource information corresponding to the first reference signal.

In a possible implementation of the fourth aspect, the first measurement result satisfies:

$$First\ measurement\ result = \left| \frac{1}{|I|} \sum_{k \in I} H(k)\ exp(2\pi jk f_{scs} D) \right|^2 ,$$

where *I* represents an index set of resource elements REs occupied by the frequency domain resource information, $|I|$ represents a quantity of elements in the set *I*, k is an index of a resource element RE occupied by the frequency domain resource information, $H(k)$ represents channel frequency response information of the RE whose index value is $k$, j is a complex number unit, $f_{scs}$ is a subcarrier spacing, and $D$ represents the propagation delay information on the first path.

In a possible implementation of the fourth aspect, the first measurement result satisfies:

$$First\ measurement\ result = \left| \frac{1}{|I|} \sum_{k \in I} H(k)\ exp\left( \frac{2\pi jk D_s}{N} \right) \right|^2 ,$$

where *I* represents an index set of resource elements REs occupied by the frequency domain resource information, |*I*| represents a quantity of elements in the set *I*, *k* is an index of a resource element RE occupied by the frequency domain resource information, $H(k)$ represents channel frequency response information of the RE whose index value is *k*, j is a complex number unit, $f_{scs}$ is a subcarrier spacing, $D_s$ represents a time domain sampling point corresponding to the propagation delay information on the first path, N is a quantity of FFT points, and $D_s$ is a real number.

In a possible implementation of the fourth aspect, the first measurement result is a measurement result of the first reference signal received on a first receiver branch set, and the first receiver branch set includes one or more receiver branches in n receiver branches.

In a possible implementation of the fourth aspect, the first receiver branch set includes a plurality of receiver branches in the n receiver branches.

In a possible implementation of the fourth aspect, the first measurement result is an average value of a plurality of measurement results obtained by measuring the first reference signal on the plurality of receiver branches in the n receiver branches.

In a possible implementation of the fourth aspect, the first measurement result is an average value obtained by performing spatial filtering on a plurality of measurement results obtained by measuring the first reference signal on the plurality of receiver branches.

In a possible implementation of the fourth aspect, the first receiver branch set includes a first receiver branch in the n receiver branches, and a quantity of receiver branches included in the first receiver branch is 1.

In a possible implementation of the fourth aspect, the first receiver branch is a receiver branch corresponding to a largest measurement result in n measurement results obtained by measuring a second reference signal on the n receiver branches.

In a possible implementation of the fourth aspect, the first measurement result includes index information of the first receiver branch set.

In a possible implementation of the fourth aspect, the first request information includes an identifier of the first path.

A fifth aspect of embodiments of this application provides a communication apparatus, including at least one processor, where the at least one processor is coupled to a memory. The memory is configured to store a program or instructions. The at least one processor is configured to execute the program or the instructions, so that the apparatus implements the method according to any one of the first aspect or the possible implementations of the first aspect, or the apparatus implements the method according to any one of the second aspect or the possible implementations of the second aspect.

A sixth aspect of embodiments of this application provides a communication apparatus, including at least one processor.

Optionally, the at least one processor is configured to perform the method according to any one of the first aspect or the possible implementations of the first aspect, or the at least one processor is configured to perform the method according to any one of the second aspect or the possible implementations of the second aspect.

Optionally, the at least one processor is configured to execute a program or instructions, so that the apparatus implements the method according to any one of the first aspect or the possible implementations of the first aspect, or the apparatus implements the method according to any one of the second aspect or the possible implementations of the second aspect.

A seventh aspect of embodiments of this application provides a computer-readable storage medium storing one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect.

An eighth aspect of embodiments of this application provides a computer program product (or referred to as a computer program) storing one or more computers. When the computer program product is executed by a processor, the processor performs the method according to any one of the first aspect or the possible implementations of the first aspect, or the processor performs the method according to any one of the second aspect or the possible implementations of the second aspect.

A ninth aspect of embodiments of this application provides a chip system. The chip system includes at least one processor, configured to support a communication apparatus in implementing functions in any one of the first aspect or the possible implementations of the first aspect, or configured to support a communication apparatus in implementing functions in any one of the second aspect or the possible implementations of the second aspect.

In a possible design, the chip system may further include a memory. The memory is configured to store program instructions and data that are necessary for the communication apparatus. The chip system may include a chip, or may include a chip and another discrete component. The chip system further includes an interface circuit, and the interface circuit provides program instructions and/or data for the at least one processor.

A tenth aspect of embodiments of this application provides a communication system. The communication system includes the communication apparatus in the third aspect and the communication apparatus in the fourth aspect, and/or the communication system includes the communication apparatus in the fifth aspect, and/or the communication system includes the communication apparatus in the sixth aspect.

For technical effects brought by any design manner in the third aspect to the tenth aspect, refer to technical effects brought by different implementations of the first aspect or the second aspect. Details are not described herein again.

It can be learned from the foregoing technical solutions that, after the communication apparatus receives, from a first device, first request information used to request to report a measurement result of a first reference signal, the communication apparatus measures, based on the first request information, the first reference signal transmitted on a first path, to obtain a first measurement result, and sends the first measurement result to the first device. In other words, the first measurement result reported by the communication apparatus to the first device is the measurement result corresponding to the first reference signal transmitted on a single path. In comparison with an implementation in which a first device performs positioning based on measurement results corresponding to reference signals transmitted on a plurality of paths, the first measurement result sent to the first device is the measurement result corresponding to the first reference signal transmitted on the single path. In this way, interference of multipath transmission can be avoided in a process in which the first device performs positioning based on the first measurement result, and positioning accuracy is improved.

**BRIEF DESCRIPTION OF DRAWINGS**

FIG. 1 is a schematic diagram of a communication system according to this application;
FIG. 2a is a schematic diagram of a communication method according to this application;
FIG. 2b is a schematic diagram of a communication method according to this application;
FIG. 3 is a schematic diagram of a communication scenario according to this application;
FIG. 4 is a schematic diagram of a communication apparatus according to this application;
FIG. 5 is another schematic diagram of a communication apparatus according to this application;
FIG. 6 is another schematic diagram of a communication apparatus according to this application; and
FIG. 7 is another schematic diagram of a communication apparatus according to this application.

**DESCRIPTION OF EMBODIMENTS**

The following describes technical solutions in embodiments of this application with reference to accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.

1. Terminal device: The terminal device may be a wireless terminal device that can receive scheduling and indication information of a network device. The wireless terminal device may be a device that provides voice and/or data connectivity for a user, a handheld device having a wireless connection function, or another processing device connected to a wireless modem.

The terminal device may communicate with one or more core networks or the internet by using a radio access network (radio access network, RAN). The terminal device may be a mobile terminal device such as a mobile telephone (or referred to as a "cellular" phone or a mobile phone (mobile phone)), a computer, and a data card. For example, the terminal device may be a portable, pocket-sized, handheld, computer built-in, or in-vehicle mobile apparatus that exchanges a voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal (remote terminal) device, an access terminal (access terminal) device, a user terminal (user terminal) device, a user agent (user agent), a subscriber station (subscriber station, SS) device, a customer premises equipment (customer premises equipment, CPE), a terminal (terminal), user equipment (user equipment, UE), a mobile terminal (mobile terminal, MT), or the like. The terminal device may alternatively be a wearable device and a terminal device in a next generation communication system, for example, a terminal device in a 5G communication system or a terminal device in a future evolved public land mobile network (public land mobile network, PLMN).

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

However, if the terminals described above are located in a vehicle, for example, placed in the vehicle or mounted in the vehicle, the terminals may be considered as in-vehicle terminals. For example, the in-vehicle terminals are also referred to as on-board units (on-board units, OBUs).

In embodiments of this application, an apparatus configured to implement a function of the terminal may be a terminal, or may be a circuit that can support the terminal in implementing the function, for example, a circuit that may be used in a chip system. The chip system may be installed in the terminal. In embodiments of this application, the chip system may include a chip, or may include a chip and another discrete component. In the technical solutions provided in embodiments of this application, an example in which an apparatus configured to implement a function of a terminal is a terminal is used to describe the technical solutions provided in embodiments of this application.

2. Network device: The network device may be a device in a wireless network. For example, the network device may be a radio access network (radio access network, RAN) node (or device) that enables a terminal device to access the wireless network, or may be referred to as a base station. Currently, some examples of the RAN device are: a next generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

The network device can send configuration information (for example, carried in a scheduling message and/or an indication message) to the terminal device. The terminal device further performs network configuration based on the configuration information, so that network configurations of the network device and the terminal device are aligned. Alternatively, through a network configuration preset in the network device and a network configuration preset in the terminal device, the network configurations of the network device and the terminal device are aligned. Specifically, the "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used to describe the technical solutions provided in embodiments of this application.

5. Sidelink (sidelink, SL): In vehicle to everything (vehicle to everything, V2X), a terminal device may communicate in two manners. In a first manner, terminal devices communicate with each other through a Uu interface. The Uu interface is a wireless interface between a terminal device and a network device. Communication between the terminal devices needs forwarding by a node such as a network device. In a second manner, sidelink communication is performed between terminal devices, in other words, direct communication may be performed between terminal devices without forwarding by the network device. In this case, a link for direct connection between the terminal devices is referred to as a sidelink.

Usually, in a sidelink technology, terminal devices may perform information direct connection through a PC5 interface between the terminal devices. In this application, the sidelink may be expressed in English as sidelink, or may be represented by using side link. Meanings of the sidelink and side link are the same, and both are English descriptions of the sidelink in this application. In this technology, information exchange can not only be provided in a service coverage area of the network device, but also be performed in an area without coverage of the network device. A terminal device authorized to be used for special communication may use a sidelink communication manner. Certainly, the sidelink communication may be used for transmission of service data of intelligent transportation, or may be used for transmission of a mobile internet service. This is not limited in this application.

4. Terms "system" and "network" in embodiments of this application may be used interchangeably. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity. This application may be applied to a terminal device in a connected state or an active state (ACTIVE), or may be applied to a terminal device in a non-connected state (INACTIVE) or an idle state (IDLE).

5. Related definitions of mathematical symbols in this application include:

(1) exp (A), representing a natural logarithm e raised to the power of A; and
(2) $|A|^2$, representing a modular square of a parameter A.

For ease of understanding of the method provided in embodiments of this application, the following describes a system architecture of the method provided in embodiments of this application. It may be understood that the system architecture described in embodiments of this application is intended to describe the technical solutions in embodiments of this application more clearly, and do not constitute any limitation on the technical solutions provided in embodiments of this application.

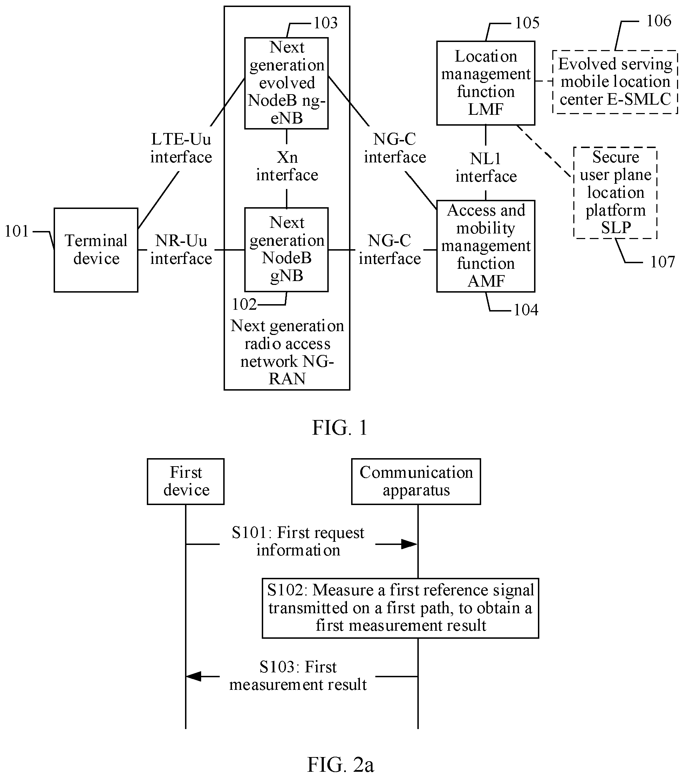

FIG. 1 is a schematic diagram of a communication system according to an embodiment of this application. Refer to FIG. 1. The communication system includes a terminal device 101, a next generation NodeB (next generation NodeB, gNB) 102, a next generation evolved NodeB (next generation evolved NodeB, ng-eNB) 103, an access and mobility management function (access and mobility management function, AMF) 104, and a location management function (location management function, LMF) 105. The LMF 105 is a network element, module, or component that provides a positioning function for a terminal device in an NR core network.

Optionally, the communication system further includes an evolved serving mobile location center (evolved serving mobile location center, E-SMLC) 106 and a secure user plane location platform (secure user plane location platform, SLP) 107. The E-SMLC 106 is a network element, module, or component that provides a positioning function in a 4G core network. The SLP 107 is a network element, module, or component that is in the 4G core network and that is configured to process a secure user plane location protocol.

The terminal device 101 communicates with an access network device (for example, the gNB 102 or the ng-eNB 103 in FIG. 1) through a Uu interface. The ng-eNB 103 is an access network device in a long term evolution (Long Term Evolution, LTE) communication system, and the gNB 102 is an access network device in an NR communication system. In the communication system, access network devices communicate with each other through an Xn interface, and the access network device communicates with the AMF 104 through an NG-C interface. The AMF 104 communicates with the LMF 105 through an NL1 interface, and the AMF 104 is equivalent to a router for communication between the access network device and the LMF 105. The LMF 105 is configured to perform positioning calculation on a location of the terminal device.

FIG. 1 shows only an example in which the communication system includes two access network devices of the gNB and the ng-eNB. However, in actual application, the communication system may include at least one access network device. This is not specifically limited in this application.

In this application, in the communication system shown in FIG. 1, the LMF is a name in the current communication system. In a future communication system, the name of the LMF may change with evolution of the communication system. In the current communication system or the future communication system, any function network element that has another name and that has a function similar to the LMF may be understood as the LMF in embodiments of this application, and is applicable to the communication method provided in embodiments of this application.

In the communication system shown in FIG. 1, an architecture that is controlled by a core network location management function (location management function, LMF) and that is assisted by an access network and a terminal may be used to implement a positioning process of the terminal device. Specifically, one or more of the following positioning technologies are included:

Downlink time difference of arrival (downlink time difference of arrival, DL-TDOA) technology: The terminal measures positioning reference signals (positioning reference signals, PRSs) sent by a plurality of TRPs, and reports measurement quantities of a downlink reference signal time difference of arrival (downlink reference signal time difference, DL RSTD) and a downlink (downlink, DL) positioning reference signal-reference signal received power (positioning reference signal-reference signal received power, PRS-RSRP) to the LMF, and the LMF calculates a location of the terminal based on the measurement quantities.

Uplink time difference of arrival (uplink time difference of arrival, UL-TDOA) technology: The terminal sends a sounding reference signal (sounding reference signal, SRS). The plurality of TRPs measure the SRS, and report measurement quantities of uplink relative time of arrival (uplink relative time of arrival, UL RTOA) and an uplink (uplink, UL) sounding reference signal-reference signal received power (sounding reference signal-reference signal received power, SRS-RSRP) to the LMF. The LMF calculates the location of the terminal based on the measurement quantities.

Downlink angle of departure (downlink angle of departure, DL-AoD) technology: The terminal measures the PRSs sent by the plurality of TRPs, and reports the measurement quantity of the DL PRS-RSRP to the LMF. The LMF calculates angles of the terminal relative to the plurality of TRPs based on the measurement quantity, and calculates the location of the terminal based on the angles.

Uplink angle of arrival (uplink angle of arrival, UL-AOA) technology: The terminal sends the SRS. The plurality of TRPs measure the SRS, and report a measurement quantity of an UL AoA and the measurement quantity of the UL SRS-RSRP to the LMF. The LMF calculates the location of the terminal based on the measurement quantities.

NR DL enhanced cell identifier (Enhanced cell ID, E-CID) technology: The terminal sends, to the LMF, an existing synchronization signal based reference signal received power (synchronization signal based reference signal received power, SS-RSRP)/synchronization signal based reference signal received quality (synchronization signal based reference signal received quality, SS-RSRQ) or a channel state information-reference signal received power (channel state information-RSRP, CSI-RSRP)/channel state information-reference signal received quality (channel state information-RSRQ, CSI-RSRQ) in radio resource management (radio resource management, RRM) measurement. The LMF calculates the location of the terminal based on a measurement quantity.

NR UL E-CID technology: A base station sends the SS-RSRP/SS-RSRQ or the CSI-RSRP/CSI-RSRQ that is in the RRM measurement and that is collected from the terminal, and the UL AoA to the LMF. The LMF calculates the location of the terminal based on the measurement quantities.

Multi-cell round trip time (multi-cell round trip time, Multi-RTT) positioning technology: The terminal sends the SRS, simultaneously measures the PRSs sent by the plurality of TRPs, and reports measurement quantities of a receive-transmit time difference (Rx-Tx time difference) of UE and the DL PRS-RSRP to the LMF. The plurality of TRPs measure the SRS and report a measurement quantity of an Rx-Tx time difference of the gNB to the LMF. The LMF calculates RTT/a distance between the UE and one TRP based on the measurement quantity of the Rx-Tx time difference of the UE and the measurement quantity of the Rx-Tx time difference of the gNB, and then calculates the location of the terminal.

Optionally, except the E-CID technology, the foregoing plurality of positioning technologies usually include the DL PRS-RSRP and the UL SRS-RSRP. For the DL-TDOA/UL-TDOA/UL-AoA/Multi-RTT, the related RSRP is mainly used to determine a field strength, estimate the location of the terminal in a coarse-grained manner, and assist another measurement quantity in determining the location of the terminal. For the DL-AoD, the RSRP needs to be used to calculate the angle of the terminal relative to the TRP.

However, in actual application, because there are a plurality of transmission paths for transmission of a reference signal (an uplink reference signal and/or a downlink reference signal), a measurement result obtained based on the reference signal is easily interfered by the multipath transmission, and positioning accuracy is affected.

To resolve the foregoing technical problem, this application provides a communication method and a communication apparatus. In comparison with an implementation in which a first device performs positioning based on measurement results corresponding to reference signals transmitted on a plurality of paths, a first measurement result sent to the first device is a measurement result corresponding to a first reference signal transmitted on a single path. In this way, interference of multipath transmission can be avoided in a process in which the first device performs positioning based on the first measurement result, and positioning accuracy is improved.

FIG. 2a is a schematic diagram of a communication method according to this application. The method includes the following steps.

S101: A first device sends first request information.

In this embodiment, the first device sends the first request information in S101, and correspondingly, a communication apparatus receives the first request information in S101.

In this embodiment and subsequent embodiments, the first device is a device configured to perform positioning on a terminal device. For example, the first device may be a core network device, so that the core network device performs positioning on the terminal device. For another example, the first device may be an access network device, so that the access network performs ranging and positioning on the terminal device. For another example, the first device may be another terminal device in a sidelink (sidelink, SL), so that the another terminal device performs positioning on the terminal device. An example in which the first device is a core network device is used for description in the following descriptions. It may be understood that the core network device in the following descriptions may also be replaced with the access network device or the another terminal device in the sidelink (sidelink, SL).

Optionally, the communication apparatus may be a terminal device or an access network device.

For example, when the communication apparatus is a terminal device, the core network device may send the first request information to the terminal device through forwarding by the access network device in S101. The first request information received by the terminal device in S101 may be carried in a non-access stratum (non-access stratum, NAS) message or an access stratum (access stratum, AS) message.

For another example, when the communication apparatus is an access network device, the core network device may send the first request information to the access network device through an interface (for example, the NG-C interface in FIG. 1) between the core network device and the access network device in S101.

In a possible implementation, the first request information sent by the core network device in S101 includes an identifier of a first path. Specifically, the first request information sent by the core network device in S101 may further include the identifier of the first path, so that the communication apparatus receives and measures, in subsequent S 102 based on an indication of the core network device, a reference signal on the specified first path.

Optionally, the first path is the 1st path (or referred to as a first-arrival path), or a path other than the 1st path.

S102: The communication apparatus measures a first reference signal transmitted on the first path, to obtain a first measurement result.

In this embodiment, in S102, the communication apparatus receives the first reference signal transmitted on the first path, and determines the measurement result.

Optionally, an implementation sequence of S101 and S102 is not limited in this application. For example, the communication apparatus first performs S101, and then performs S102. For another example, the communication apparatus may first perform S 102, and then perform S101.

Optionally, the first measurement result is a reference signal received power (reference signal received power, RSRP) or reference signal received quality (reference signal received quality, RSRQ).

Optionally, the first measurement result may also be expressed as a first measurement value, a first measurement quantity, or the like.

In a possible implementation, before S102, the core network device may further send first configuration information to the communication apparatus, and the first configuration information is used to configure the first reference signal.

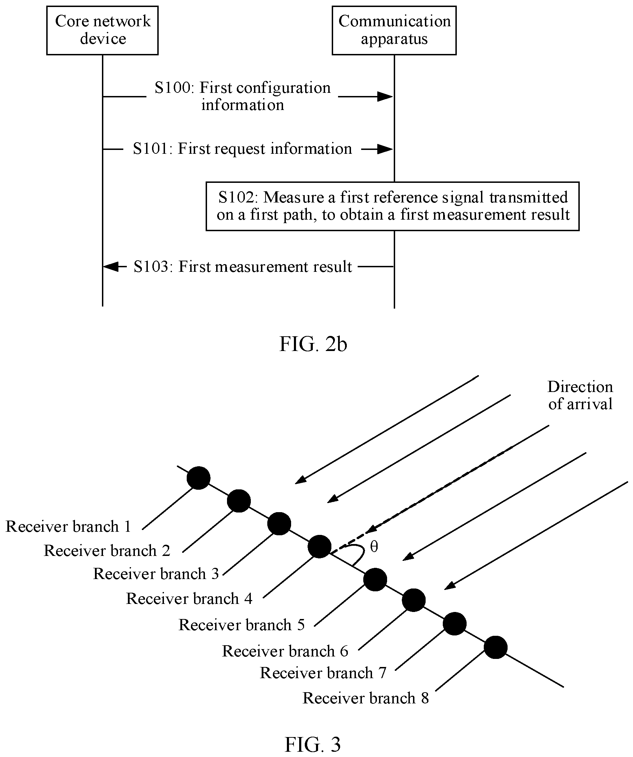

For example, the implementation process shown in FIG. 2a may alternatively be described as an implementation process shown in FIG. 2b. In comparison with the implementation shown in FIG. 2a, S100 is added to an implementation shown in FIG. 2b. In S100, the core network device sends first configuration information to the communication apparatus, and the first configuration information is used to configure the first reference signal.

Optionally, in the implementation shown in FIG. 2b, an example in which the first device is a core network device is used for description. It may be understood that the core network device may alternatively be an access network device or another terminal device in an SL communication scenario.

The first configuration information includes one or more of time domain resource information, frequency domain resource information, periodicity information, and the like of the first reference signal. For example, when the first configuration information includes the time domain resource information that carries the first reference signal, the first measurement result obtained by the communication apparatus in S 102 may be an average value corresponding to measurement values of the first reference signal on a plurality of symbols corresponding to the time domain resource information. For another example, when the first configuration information includes the periodicity information that carries the first reference signal, the first measurement result obtained by the communication apparatus in S102 may be an average value corresponding to a plurality of measurement values of the first reference signal on a plurality of periodicities corresponding to the periodicity information.

Optionally, in an implementation of the first configuration information, the first configuration information in S100 and the first request information in S 101 may be carried in a same message. In other words, the communication apparatus receives the first request information from the core network device and the first configuration information in S101.

Optionally, in another implementation of the first configuration information, the first configuration information in S100 and the first request information in S101 may be carried in different messages. In other words, the communication apparatus receives the first request information from the core network device in S101, and the communication apparatus receives the first configuration information in another process (a process different from S101, for example, S100) before S102.

S103: The communication apparatus sends the first measurement result.

In this embodiment, after obtaining the first measurement result in S102, the communication apparatus sends the first measurement result in S103. Correspondingly, the core network device receives the first measurement result in S103.

After S103, to be specific, after the core network device receives the first measurement result, the core network device performs positioning on the terminal device based on the first measurement result.

For example, when the communication apparatus that reports the first measurement result is a terminal device, the first measurement result is a measurement result corresponding to the first reference signal that is measured by the terminal device and that serves as a downlink reference signal (in other words, the first reference signal is the downlink reference signal sent by the access network device to the terminal device), so that the core network device performs, based on the first measurement result, positioning on the terminal device that receives the downlink reference signal.

For another example, when the communication apparatus that reports the first measurement result is an access network device, the first measurement result is a measurement result corresponding to the first reference signal that is measured by the access network device and that serves as an uplink reference signal (in other words, the first reference signal is an uplink reference signal sent by the terminal device to the access network device), so that the core network device performs, based on the first measurement result, positioning on the terminal device that sends the uplink reference signal.

In a possible implementation, before the communication apparatus measures, in S102, the first reference signal transmitted on the first path to obtain the first measurement result, the communication apparatus may first determine propagation delay information on the first path, and further determine the first measurement result based on the propagation delay information on the first path.

The communication apparatus may determine the propagation delay information of the first reference signal on the first path in a plurality of manners, for example, an oversampling (oversampling) method, a multiple signal classification (multiple signal classification, MUSIC) method, or another method. This is not limited herein.

Optionally, in an implementation example, if the propagation delay information on the first path is determined by using the oversampling method, a channel impulse response estimated based on the first reference signal may be obtained, in an interpolation manner, by sampling at a frequency that is greater than k (where k is greater than or equal to 2) times a bandwidth of the reference signal. At the sampling frequency, a sampling point corresponding to a peak value of the channel impulse response is determined, and then the sampling point is converted into a delay/TOA, to determine the propagation delay information on the first path.

Optionally, in another implementation example, if the propagation delay information on the first path is determined by using the MUSIC method, an autocorrelation matrix of the channel frequency response may be estimated by using the channel frequency response. Eigenvalue decomposition is performed on the autocorrelation matrix, a signal space is formed by extracting an eigenvector of a principal component (where the principal component has a large eigenvalue), and a space orthogonal to the signal space is a noise space. A channel frequency response vector $F(x)$ corresponding to the propagation delay information (denoted as x) on the first path is projected into the noise space, and energy of a projection vector of the propagation delay information forms a MUSIC pseudo-spectrum $P(x)$ related to the delay x. An x corresponding to a peak value of the MUSIC pseudo-spectrum $P(x)$ is the propagation delay information of the first path, and an x corresponding to an earliest peak value is propagation delay information of the $1^{st}$ path.

In a possible implementation, in S102, after the communication apparatus determines the propagation delay information on the first path, the communication apparatus may determine the first measurement result based on the propagation delay information on the first path in a plurality of implementations.

Implementation 1: The first measurement result determined by the communication apparatus in S102 may be expressed as a power value obtained by performing, based on propagation delay information on the first path, frequency domain compensation processing and averaging processing on channel frequency response information of frequency domain resource information corresponding to the first reference signal.

Optionally, the first measurement result determined by the communication apparatus in S102 may alternatively be expressed as a power value obtained by performing, based on propagation delay information on the first path, frequency domain compensation processing and/or averaging processing on channel frequency response information of frequency domain resource information corresponding to the first reference signal. In other words, the communication apparatus performs at least one of "frequency domain compensation processing" and "averaging processing" in S102, to determine the first measurement result.

Optionally, the first measurement result determined by the communication apparatus in S102 may alternatively be expressed as a power of a linear average of a delay-compensated channel frequency response of the frequency domain resource information (namely, an RE set) used to carry the first reference signal. A delay used for "delay compensation" is the propagation delay information on the first path. (Path RSRP is the power (in [W]) of the linear average of the delay-compensated channel frequency response of the resource elements that carry the RS (PRS/SRS). The delay corresponds to the delay of the path.)

Optionally, the first measurement result determined by the communication apparatus in S102 may alternatively be expressed as a power of an average of an equivalent channel frequency response with a delay on the first path shifted to zero of the frequency domain resource information (namely, an RE set) used to carry the first reference signal. (Path RSRP is the power (in [W]) of the linear average of the equivalent channel frequency response with the path delay shifted to 0 of the resource elements that carry the RS (PRS/SRS).)

Optionally, in an implementation example, the first reference signal may be a downlink PRS, and the first measurement result may be a downlink PRS-RSRP. The first measurement result determined by the communication apparatus in S102 may alternatively be expressed as follows: Path DL PRS-RSRP of delay-D is a power (unit: W) of a linear average of a delay-D compensated channel frequency response of resource elements configured for downlink PRS-RSRP measurement within a configured measurement frequency bandwidth. (Path DL PRS-RSRP of delay-D is the power (in [W]) of the linear average of the delay-D compensated channel frequency response of the resource elements that carry DL PRS reference signals configured for path DL PRS-RSRP measurement within the configured with measurement frequency bandwidth.)

Optionally, in an implementation example, the first reference signal may be an uplink SRS, and the first measurement result may be an uplink SRS-RSRP. The first measurement result determined by the communication apparatus in S102 may alternatively be expressed as follows: Path UL SRS-RSRP of delay-D is a power (unit: W) of a linear average of a delay-D compensated channel frequency response of resource elements that carry sounding reference signals. Path uplink SRS-RSRP shall be measured by using the configured resource elements within a considered measurement frequency bandwidth in configured measurement time occasions. (Path UL SRS-RSRP of delay-D is the power (in [W]) of the linear average of the delay-D compensated channel frequency response of the resource elements that carry sounding reference signals. Path UL SRS-RSRP shall be measured over the configured resource elements within the considered measurement frequency bandwidth in the configured measurement time occasions.)

Optionally, the first measurement result determined by the communication apparatus in S102 satisfies:

$$First\ measurement\ result = \left| \frac{1}{|I|} \sum_{k \in I} H(k)\, exp(2\pi jk f_{scs} D) \right|^2,$$

where I represents an index set of resource elements REs occupied by the frequency domain resource information, III represents a quantity of elements in the set I, k is an index of a resource element RE occupied by the frequency domain resource information, H(k) represents channel frequency response information of the RE whose index value is k, j is a complex number unit, f_scs is a subcarrier spacing, and D represents the propagation delay information on the first path.

Optionally, the first measurement result determined by the communication apparatus in S102 satisfies:

$$First\ measurement\ result = \left| \frac{1}{|I|} \sum_{k \in I} H(k)\, exp\left( \frac{2\pi jk D_s}{N} \right) \right|^2,$$

where I represents an index set of resource elements REs occupied by the frequency domain resource information, III represents a quantity of elements in the set I, k is an index of a resource element RE occupied by the frequency domain resource information, H(k) represents channel frequency response information of the RE whose index value is k, j is a complex number unit, f_scs is a subcarrier spacing, $D_s$ represents a time domain sampling point corresponding to the propagation delay information on the first path, N is a quantity of FFT points, and $D_s$ is a real number.

Implementation 2: The process in which the communication apparatus measures, in S102, the first reference signal transmitted on the first path, to obtain the first measurement result may specifically include: The communication apparatus determines the propagation delay information of the first reference signal on the first path. The communication apparatus determines first channel frequency response information of the frequency domain resource information corresponding to the first reference signal. The communication apparatus performs frequency domain compensation processing on the first channel frequency response information based on the propagation delay information, to obtain second channel frequency response information. The communication apparatus performs averaging processing on the second channel frequency response information to obtain the first measurement result.

Optionally, that the communication apparatus performs averaging processing on the second channel frequency response information to obtain the first measurement result includes: The communication apparatus performs average processing and modular square processing on the second channel frequency response information to obtain the first measurement result.

Specifically, in the foregoing implementation 1 and implementation 2, the first configuration information used to configure the first reference signal includes the frequency domain resource information carrying the first reference signal, and the frequency domain resource information corresponds to a resource element (resource element, RE) set. However, there is a channel frequency response in the RE set. Therefore, in the implementation in which the first measurement result is the power value obtained by performing, based on the propagation delay information on the first path, frequency domain compensation processing and averaging processing on the channel frequency response information of the frequency domain resource information corresponding to the first reference signal, the first measurement result may be obtained by performing, based on the propagation delay information, compensation on the channel frequency response information of the frequency domain resource information corresponding to the first reference signal. In this way, interference caused by the propagation delay information corresponding to the first path to a measurement process is avoided to some extent, and accuracy of subsequent positioning performed by the core network device based on the first measurement result is further improved.

In a possible implementation, the first reference signal is a reference signal received by a first receiver branch set, and the first receiver branch set includes one or more receiver branches in n receiver branches.

Alternatively, expression is as follows: The process in which the communication apparatus measures, in S102, the first reference signal transmitted on the first path, to obtain the first measurement result includes: The communication apparatus receives, on a first receiver branch set, the first reference signal transmitted on the first path, and the first receiver branch set includes one or more receiver branches in n receiver branches. The communication apparatus measures the first reference signal to obtain the first measurement result.

Specifically, when the communication apparatus includes a plurality of (namely, n) receiver branches, the first measurement result may be specifically a measurement result corresponding to the first reference signal that is transmitted on the first path and that is received by the communication apparatus on the first receiver branch set in the n receiver branches. In other words, the measurement result corresponding to the first reference signal that is transmitted on the first path and that is received by the communication apparatus on the first receiver branch set is determined as the first measurement result. Therefore, in comparison with an implementation in which a plurality of receiver branches in the communication apparatus may receive same reference signals transmitted on a plurality of paths and obtain a plurality of measurement results through measurement, the first measurement result determined by using the first reference signal that is transmitted on the first path and that is received by using a same receiver branch set (namely, the first receiver branch set) may reduce interference between different receiver branches in the communication apparatus to some extent, and further improve the accuracy of subsequent positioning performed by the core network device based on the first measurement result.

In an implementation example, the first reference signal may be a downlink PRS, and the first measurement result may be a downlink PRS-RSRP. In a process in which the communication apparatus determines the first measurement result in S102, for path downlink PRS-RSRP measurement reporting, when receive diversity is in use, at least additionally reporting an Rx branch ID to determine whether different path downlink PRS-RSRP measurements are associated with a same Rx branch is considered. (For path DL PRS-RSRP measurement reporting, when receiver diversity is in use, at least consider additionally reporting the Rx branch ID to identify whether different path DL PRS-RSRP measurements are associated with the same Rx branch.)

In an implementation example, the first reference signal may be an uplink SRS, and the first measurement result may be an uplink SRS-RSRP. In the process in which the communication apparatus determines the first measurement result in S102, for path uplink SRS-RSRP measurement reporting, when receiver diversity is in use, at least additionally reporting an Rx branch set ID to identify whether different path RSRP measurements are associated with a same Rx branch set is considered. (For path UL SRS-RSRP measurement reporting, when receiver diversity is in use, at least consider additionally reporting the Rx branch set ID to identify whether different path RSRP measurements are associated with the same Rx branch set.)

Optionally, the first measurement result sent by the communication apparatus in S103 includes index information of the first receiver branch set. Specifically, the first measurement result reported by the communication apparatus in S103 may further include the index information indicating the first receiver branch set, so that the core network device determines, based on the index information, a receiver branch used by the communication apparatus to receive the first reference signal.

It should be noted that the first measurement result may be carried in a first message, and the first message further includes the index information. In other words, the communication apparatus sends the index information to the core network device by using S103. Alternatively, a location of the index information in the first message is different from that of the first measurement result. In other words, the communication apparatus sends the index information to the core network device by using another message different from the message in S 103.

In this embodiment and subsequent embodiments of this application, the index information may be an index (index) of the first receiver branch set, may be an identifier (identifier, ID) of the first receiver branch set, or may be implemented in another manner. This is not limited herein.

In an implementation example of the index information, for a receiver branch index (Receiver branch ID), in one report message or in measurement result information that is of a TRP measured by the terminal and that is included in one report message, different path power measurement corresponding to a same receiver branch ID are obtained by a same receiver branch.

In another implementation example of the index information, for a receiver branch set index (Receiver branch set ID), in one report message or in measurement result information that is of a TRP measured by the terminal and that is included in one report message, different path power measurement values corresponding to a same receiver branch set ID are obtained by a same receiver branch set. The same receiver branch set may include one or more receiver branches, and the path power measurement value is an average value of one or more corresponding path powers that are of a same path and that are measured on the one or more receiver branches included in the receiver branch set.

When there are path power values obtained through measurement by a plurality of receiver branches, a path power measurement value may alternatively not carry receiver branch information, and the terminal may determine a to-be-reported net power value by using one of the following methods.

In another implementation example of the index information, an average value of path power values that are of a same path and that are measured on all the receiver branches is selected.

In another implementation example of the index information, a path power value obtained through measurement on a receiver branch having a largest RSRP is selected.

In S102, the first receiver branch set that is used by the communication apparatus and that is used to measure the first reference signal to obtain the first measurement result includes a plurality of implementations. The following separately describes the implementations.

Case 1: In S102, the first receiver branch set used by the communication apparatus to measure the first reference signal to obtain the first measurement result includes a plurality of receiver branches in the n receiver branches.

In a possible implementation, the first measurement result is an average value of a plurality of measurement results obtained by measuring the first reference signal on the plurality of receiver branches.

Optionally, the average value of the plurality of measurement results may be specifically an average value obtained by performing weighted averaging on the plurality of measurement results, an average value obtained by performing geometric averaging on the plurality of measurement results, or an average value obtained in another manner. This is not limited herein.

Specifically, when the first receiver branch set includes the plurality of receiver branches in the n receiver branches, the first measurement result may be specifically an average value of the plurality of measurement results obtained by measuring the first reference signal on the plurality of receiver branches. In this way, the first measurement result may reflect receiving features of the plurality of receiver branches included in the first receiver branch set to some extent.

Optionally, the first measurement result is an average value obtained by performing spatial filtering on a plurality of measurement results obtained by measuring the first reference signal on the plurality of receiver branches.

Specifically, when the first receiver branch set includes the plurality of receiver branches in the n receiver branches, the first measurement result may be specifically the average value obtained by performing spatial filtering on the plurality of measurement results of the first reference signal. Therefore, interference caused by another path to the first reference signal transmitted on the first path may be reduced by using a filtering processing process, and the accuracy of the subsequent positioning performed by the core network device based on the first measurement result may be further improved.

For example, as described above, when the first receiver branch set includes a plurality of receiver branches, filtering may be further applied.

An implementation scenario is shown in FIG. 3. It is assumed that a first receiver branch set includes eight receiver branches (a receiver branch 1, a receiver branch 2, ..., and a receiver branch 8 shown in FIG. 3), and a relationship between the eight receiver branches is a linear arrangement manner shown in FIG. 3. An angle between a direction of arrival of a radio wave carrying the first reference signal and a straight line on which the eight receiver branches are located is denoted as $\theta$. In an implementation example, in the filtering process, a plurality of receiver branches may be used to estimate an angle of arrival, and channel frequency responses on the plurality of receiver branches may be projected onto a steering vector corresponding to the corresponding angle of arrival, so that influence of another multipath on the first path can be reduced. In an implementation example, the filtering process may be represented as:

$$H_{spatialfilter}(k) = \frac{\boldsymbol{vv}^H H_{nonspatialfilter}(k)}{||\boldsymbol{v}||^2},$$

where $H_{spatialfilter}(k) = \left[ H^0_{spatialfilter}(k), H^1_{spatialfilter}(k), \ldots, H^{M-1}_{spatialfilter}(k) \right]^T$ is a channel frequency response vector on a plurality of branches after spatial filtering, $H^m_{spatialfilter}(k)$ is a channel frequency response on an RE (denoted as an RE k) after spatial filtering on a receiver branch $m$, and M is a quantity of receiver branches used for spatial filtering. $H_{nonspatialfilter}(k) = \left[ H^0_{nonspatialfilter}(k), H^1_{nonspatialfilter}(k), \ldots, H^{M-1}_{nonspatialfilter}(k) \right]^T$ is a channel frequency response vector on a plurality of branches before spatial filtering, where $H^m_{nonspatialfilter}(k)$ is a channel frequency response on an RE $k$ before spatial filtering on a receiver branch m.

$v=[v^0,v^1,\ldots,v^{M-1}]^T$ is a spatial filtering steering vector used to apply spatial filtering. Conventionally, for a linear uniform array, a spacing is d, a radio signal wavelength is $\lambda$, and a steering vector $v^m$ whose direction of arrival is $\theta$ satisfies:

$$v^m = exp\left( 2\pi j \frac{d}{\lambda} m\, cos\, \theta \right).$$

Optionally, $H^m_{spatialfilter}(k)$ may be substituted into the foregoing calculation process of the first measurement result as the foregoing $H(k)$. Alternatively, $H^m_{nonspatialfilter}(k)$ may be substituted into the foregoing calculation process of the first measurement result as the foregoing $H(k)$, and in this case, no spatial filtering is applied.

Optionally, $H^m_{spatialfilter}(k)$ may be substituted into an implementation example of the foregoing calculation process of the first measurement result as the foregoing $H(k)$:

$$h(D) = \frac{1}{\text{Numel}(\boldsymbol{h})} \left\| \frac{1}{|I|} \sum_{k \in I} \frac{1}{N_{\mathrm{H}} N_{\mathrm{V}}}\, \boldsymbol{s}(\hat{\theta}, \hat{\varphi}) \boldsymbol{s}^{\mathrm{H}}(\hat{\theta}, \hat{\varphi}) \boldsymbol{h}(k) \exp\left( 2\pi j \frac{Dk}{N} \right) \right\|^2$$

In the foregoing implementation, $h(D)$ represents the first measurement result, Numel($\boldsymbol{h}$) represents a quantity of receiver branches included in the first receiver branch set, I represents an index set of resource elements REs occupied by the frequency domain resource information corresponding to the first reference signal, |I| represents a quantity of elements in the set I, k is an index of a resource element RE occupied by the frequency domain resource information, $h(k)$ represents the channel frequency response information of the RE whose index value is k, j is a complex number unit, and N is a quantity of FFT points.

$N_{\mathrm{H}}$ represents a quantity of receiver branches in a horizontal direction under a rectangular receiver array, $N_{\mathrm{V}}$ represents a quantity of receiver branches in a vertical direction under the rectangular receiver array, $\boldsymbol{s}(\hat{\theta}, \hat{\varphi})$ represents a spatial filtering steering vector corresponding to an azimuth angle $\hat{\varphi}$ and a pitch angle $\hat{\theta}$, $\boldsymbol{s}^{\mathrm{H}}(\hat{\theta}, \hat{\varphi})$ represents a conjugate transpose of $\boldsymbol{s}(\hat{\theta}, \hat{\varphi})$, and D represents the propagation delay information on the first path.

Case 2: In S102, the first receiver branch set used by the communication apparatus to measure the first reference signal to obtain the first measurement result includes a first receiver branch in the n receiver branches, and a quantity of receiver branches included in the first receiver branch is 1.

In a possible implementation, the first receiver branch is a receiver branch corresponding to a largest measurement result in n measurement results obtained by measuring a second reference signal on the n receiver branches.

Optionally, the second reference signal is a reference signal historically received by the communication apparatus.

Specifically, when the first receiver branch set includes one of the n receiver branches (namely, the first receiver branch), the first receiver branch may be specifically the receiver branch corresponding to the largest measurement result corresponding to another previously received reference signal (namely, the second reference signal) in the n receiver branches in the communication apparatus. Therefore, the first reference signal is received by a specified receiver branch determined by the communication apparatus based on receiving quality of another reference signal, so that receiving quality of the first reference signal may be improved to some extent, to obtain the first measurement result, and the accuracy of subsequent positioning performed by the core network device after S103 based on the first measurement result is further improved.

Based on the foregoing technical solution, after the communication apparatus receives, from the core network device, the first request information used to request to report the measurement result of the first reference signal, the communication apparatus measures, based on the first request information, the first reference signal transmitted on the first path, to obtain the first measurement result, and sends the first measurement result to the core network device. In other words, the first measurement result reported by the communication apparatus to the core network device is the measurement result corresponding to the first reference signal transmitted on a single path. In comparison with an implementation in which a core network device performs positioning based on measurement results corresponding to reference signals transmitted on a plurality of paths, the first measurement result sent to the core network device is the measurement result corresponding to the first reference signal transmitted on the single path. In this way, interference of multipath transmission can be avoided in a process in which the core network device performs positioning based on the first measurement result, and positioning accuracy is improved.

For example, positioning methods such as the DL-TDOA, UL-TDOA, UL-AoA, and Multi-RTT mainly depend on a ToA and an AoA of the 1st path. However, multipath measurement reporting is determined by a total power of all paths, and quality of the 1st path cannot be reflected. As a result, misjudgment may occur in RSRP-based positioning. In addition, the DL-AoD depends on RSRPs of the 1st path in different transmission beams, and current measurement reporting is easily affected by another path. In this way, the measurement reporting is approximately equivalent to the RSRP of the 1st path only when the power of the 1st path is strong. In another case, the DL-AoD calculation may be inaccurate. Therefore, improvement of the communication method shown in FIG. 3 enables the first measurement result reported by the communication apparatus to correspond to the measurement result of the first reference signal transmitted on the single path. This can effectively avoid the interference of multipath transmission, and improve the positioning accuracy. In addition, multipath-based reporting may overcome a problem of a non-line-of-sight (non-line-of-sight, NLOS) environment, and may also enable reflection path-based positioning. In this case, for multipath measurement reporting, a power of a feedback path helps improve effectiveness of multipath reporting.

The foregoing describes this application from a perspective of a method, and the following describes an apparatus in this application.

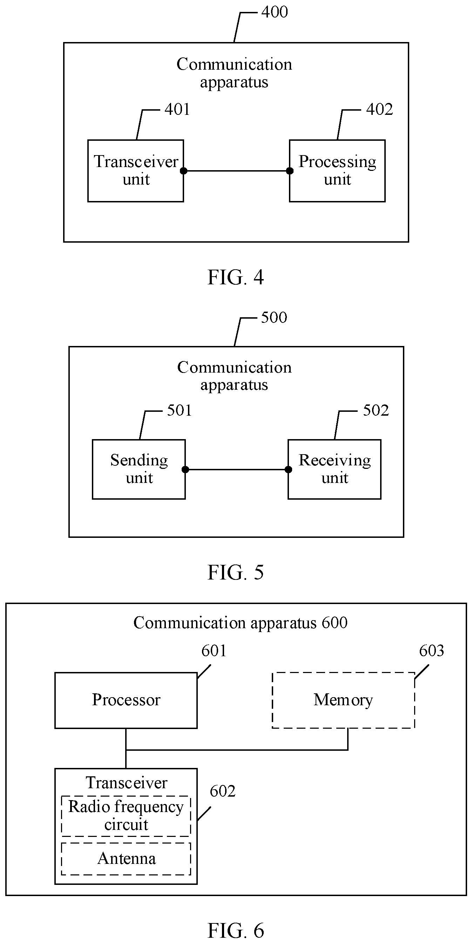

FIG. 4 is a schematic diagram of a communication apparatus according to this application. The communication apparatus 400 includes a transceiver unit 401 and a processing unit 402.

Optionally, the transceiver unit 401 may also be referred to as a transceiver module, a transceiver module group, a transceiver, a signal transceiver, or the like.

Optionally, the processing unit 402 may also be referred to as a processing module, a processor, a signal processor, a processing apparatus, or the like.

Optionally, the transceiver unit 401 may also include a sending unit (or referred to as a sending module, a transmitting module group, a transmitter, a signal transmitter, or the like) and a transceiver unit (or referred to as a receiving module, a receiving module group, a receiver, a signal receiver, or the like). The sending unit and a receiving unit may be integrated into a same physical/virtual module for implementation, or may be implemented by using physical/virtual modules that are separately disposed. This is not limited herein.

Optionally, when the communication apparatus 400 is a chip, the transceiver unit 401 may alternatively be an input/output interface.

The communication apparatus 400 may be specifically the communication apparatus (namely, the access network device or the terminal device) in any one of the foregoing embodiments.

The transceiver unit 401 is configured to receive first request information from a first device, where the first request information is used to request to report a measurement result of a first reference signal.

The processing unit 402 is configured to measure the first reference signal transmitted on a first path, to obtain a first measurement result.

The transceiver unit 401 is configured to send the first measurement result to the first device.

In a possible implementation, the first measurement result is a power value obtained by performing, based on propagation delay information on the first path, frequency domain compensation processing and averaging processing on channel frequency response information of frequency domain resource information corresponding to the first reference signal.

In a possible implementation, the processing unit 402 is specifically configured to:

determine the propagation delay information of the first reference signal on the first path;
determine first channel frequency response information of the frequency domain resource information corresponding to the first reference signal;
perform frequency domain compensation processing on the first channel frequency response information based on the propagation delay information, to obtain second channel frequency response information; and
perform averaging processing on the second channel frequency response information to obtain the first measurement result.

In a possible implementation, the first measurement result satisfies:

$$First\ measurement\ result = \left| \frac{1}{|I|} \sum_{k \in I} H(k)\ exp(2\pi jk f_{scs} D) \right|^2,$$

where $I$ represents an index set of resource elements REs occupied by the frequency domain resource information, $|I|$ represents a quantity of elements in the set $I$, $k$ is an index of a resource element RE occupied by the frequency domain resource information, $H(k)$ represents channel frequency response information of the RE whose index value is $k$, j is a complex number unit, $f_{scs}$ is a subcarrier spacing, and $D$ represents the propagation delay information on the first path.

In a possible implementation, the first measurement result satisfies:

$$First\ measurement\ result = \left| \frac{1}{|I|} \sum_{k \in I} H(k)\ exp\left( \frac{2\pi jk D_s}{N} \right) \right|^2,$$

where $I$ represents an index set of resource elements REs occupied by the frequency domain resource information, $|I|$ represents a quantity of elements in the set $I$, $k$ is an index of a resource element RE occupied by the frequency domain resource information, H(k) represents channel frequency response information of the RE whose index value is $k$, j is a complex number unit, $f_{scs}$ is a subcarrier spacing, $D_s$ represents a time domain sampling point corresponding to the propagation delay information on the first path, N is a quantity of FFT points, and $D_s$ is a real number.

In a possible implementation, the processing unit 402 is specifically configured to:

receive, on a first receiver branch set, the first reference signal transmitted on the first path, where the first receiver branch set includes one or more receiver branches in n receiver branches; and
measure the first reference signal to obtain the first measurement result.

In a possible implementation, the first receiver branch set includes a plurality of receiver branches in the n receiver branches.
In a possible implementation, the first measurement result is an average value of a plurality of measurement results obtained by measuring the first reference signal on the plurality of receiver branches.
In a possible implementation, the first measurement result is an average value obtained by performing spatial filtering on a plurality of measurement results obtained by measuring the first reference signal on the plurality of receiver branches.
In a possible implementation, the first receiver branch set includes a first receiver branch in the n receiver branches, and a quantity of receiver branches included in the first receiver branch is 1.
In a possible implementation, the first receiver branch is a receiver branch corresponding to a largest measurement result in n measurement results obtained by measuring a second reference signal on the n receiver branches.
In a possible implementation, the first measurement result includes index information of the first receiver branch set.
In a possible implementation, the first request information includes an identifier of the first path.
It should be noted that the communication apparatus 400 may be further configured to perform an implementation process corresponding to any one of the foregoing method embodiments, and implement corresponding beneficial effects. For details, refer to descriptions in the foregoing embodiments. Details are not described herein again.
FIG. 5 is a schematic diagram of a communication apparatus according to this application. The communication apparatus 500 includes a sending unit 501 and a receiving unit 502.
Optionally, the sending unit 501 may also be referred to as a sending module, a transmitting module group, a transmitter, a signal transmitter, or the like.

Optionally, the receiving unit 502 may also be referred to as a receiving module, a receiving module group, a receiver, a signal receiver, or the like.

Optionally, the sending unit 501 and a receiving unit 502 may be integrated into a same physical/virtual module for implementation, or may be implemented by using physical/virtual modules that are separately disposed. This is not limited herein. The sending unit 501 and the receiving unit 502 may be integrated into a same physical/virtual module for implementation, and may also be referred to as a transceiver unit, a transceiver module, a transceiver module group, a transceiver, a signal transceiver, or the like.

Optionally, when the communication apparatus 500 is a chip, the sending unit 501 may alternatively be an output interface, and the receiving unit 502 may alternatively be an input interface.

The communication apparatus 500 may be specifically the first device in any one of the foregoing embodiments.

The sending unit 501 is configured to send first request information, where the first request information is used to request to report a measurement result of a first reference signal.

The receiving unit 502 is configured to receive a first measurement result of the first reference signal transmitted on a first path.

In a possible implementation, the first measurement result is a power value obtained by performing, based on propagation delay information on the first path, frequency domain compensation processing and averaging processing on channel frequency response information of frequency domain resource information corresponding to the first reference signal.

In a possible implementation, the first measurement result satisfies:

$$First\ measurement\ result = \left| \frac{1}{|I|} \sum_{k \in I} H(k)\ exp(2\pi jk f_{scs} D) \right|^2,$$

where $I$ represents an index set of resource elements REs occupied by the frequency domain resource information, $|I|$ represents a quantity of elements in the set $I$, $k$ is an index of a resource element RE occupied by the frequency domain resource information, $H(k)$ represents channel frequency response information of the RE whose index value is $k$, j is a complex number unit, $f_{scs}$ is a subcarrier spacing, and $D$ represents the propagation delay information on the first path.

In a possible implementation, the first measurement result satisfies:

$$First\ measurement\ result = \left| \frac{1}{|I|} \sum_{k \in I} H(k)\ exp\left( \frac{2\pi jk D_s}{N} \right) \right|^2,$$

where $I$ represents an index set of resource elements REs occupied by the frequency domain resource information, $|I|$ represents a quantity of elements in the set $I$, $k$ is an index of a resource element RE occupied by the frequency domain resource information, H(k) represents channel frequency response information of the RE whose index value is $k$, j is a complex number unit, $f_{scs}$ is a subcarrier spacing, $D_s$ represents a time domain sampling point corresponding to the propagation delay information on the first path, N is a quantity of FFT points, and $D_s$ is a real number.

In a possible implementation, the first measurement result is a measurement result of the first reference signal received on a first receiver branch set, and the first receiver branch set includes one or more receiver branches in n receiver branches.

In a possible implementation, the first receiver branch set includes a plurality of receiver branches in the n receiver branches.

In a possible implementation, the first measurement result is an average value of a plurality of measurement results obtained by measuring the first reference signal on the plurality of receiver branches in the n receiver branches.

In a possible implementation, the first measurement result is an average value obtained by performing spatial filtering on a plurality of measurement results obtained by measuring the first reference signal on the plurality of receiver branches.

In a possible implementation, the first receiver branch set includes a first receiver branch in the n receiver branches, and a quantity of receiver branches included in the first receiver branch is 1.

In a possible implementation, the first receiver branch is a receiver branch corresponding to a largest measurement result in n measurement results obtained by measuring a second reference signal on the n receiver branches.

In a possible implementation, the first measurement result includes index information of the first receiver branch set.

In a possible implementation, the first request information includes an identifier of the first path.

It should be noted that the communication apparatus 500 may be further configured to perform an implementation process corresponding to any one of the foregoing method embodiments, and implement corresponding beneficial effects. For details, refer to descriptions in the foregoing embodiments. Details are not described herein again.

FIG. 6 is a schematic diagram of a structure of a communication apparatus 600 according to an embodiment of this application. The communication apparatus 600 includes at least a processor 601.

Optionally, the communication apparatus 600 may further include a transceiver 602.

Optionally, the communication apparatus 600 may be the terminal device (or the first device, where the first device is a terminal device in an SL communication scenario) in the foregoing embodiment, or a chip in the terminal device.

FIG. 6 shows only main components of the communication apparatus 600. In addition to the processor 601 and the transceiver 602, the communication apparatus may further include a memory 603 and an input/output apparatus (not shown in the figure).

Optionally, the transceiver 602 may be referred to as a transmitter and a receiver. The transmitter and the receiver may be integrated into a same physical/virtual module for implementation, or may be implemented by using physical/virtual modules that are separately disposed. Alternatively, when the communication apparatus 600 is a chip, the transceiver 602 may be an input/output interface.

The processor 601 is mainly configured to process a communication protocol and communication data, control the entire communication apparatus, execute a software program, and process data of the software program. The memory 603 is mainly configured to store the software program and data. The transceiver 602 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

The processor 601, the transceiver 602, and the memory 603 may be connected through a communication bus.

After the communication apparatus is powered on, the processor 601 may read the software program from the memory 603, interpret and execute instructions of the software program, and process data of the software program. When data needs to be sent wirelessly, the processor 601 performs baseband processing on the to-be-sent data, and then outputs a baseband signal to the radio frequency circuit. The radio frequency circuit performs radio frequency processing on the baseband signal, and then sends, via the antenna, a radio frequency signal in the form of an electromagnetic wave. When data is sent to the communication apparatus, the radio frequency circuit receives the radio frequency signal via the antenna, converts the radio frequency signal into a baseband signal, and outputs the baseband signal to the processor 601. The processor 601 converts the baseband signal into data for processing.

In any one of the foregoing designs, the processor 601 may include a communication interface configured to implement receiving and sending functions. For example, the communication interface may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 601 may store instructions. The instructions may be a computer program. The computer program is run on the processor 601, so that the communication apparatus 600 can perform the method described in the foregoing method embodiments. The computer program may be fixed in the processor 601. In this case, the processor 601 may be implemented by hardware.

In an implementation, the communication apparatus 600 may include a circuit for implementing a sending, receiving, or communication function in any one of the foregoing method embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured using various IC technologies, for example, a complementary metal oxide semiconductor (complementary metal oxide semiconductor, CMOS), an n-type metal oxide semiconductor (nMetal oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

In an implementation process, the processor 601 may be configured to perform, for example but not limited to, baseband related processing; and the transceiver 602 may be configured to perform, for example but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system on chip (system on chip). Whether components are independently disposed on different chips or are integrated and disposed on one or more chips usually depends on a specific requirement of a product design. Specific implementation forms of the foregoing components are not limited in this embodiment of this application.

It should be noted that the communication apparatus 600 shown in FIG. 6 may be specifically configured to implement other steps implemented by the terminal device in the foregoing corresponding method embodiments, and implement technical effects corresponding to the terminal device. For specific implementations of the communication apparatus 600 shown in FIG. 6, refer to the descriptions in the foregoing method embodiments. Details are not described herein again.

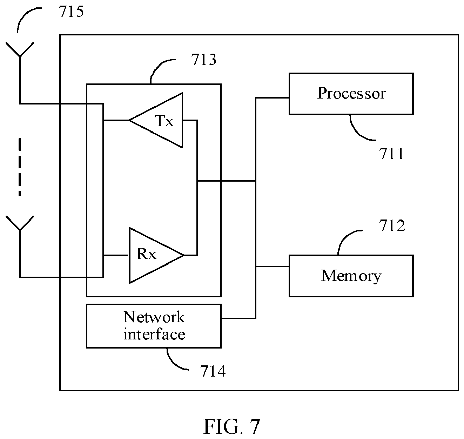

FIG. 7 is a schematic diagram of a structure of a network device in the foregoing embodiments according to an embodiment of this application. For a structure of the network device (an access network device or a first device, where the first device is implemented by using a core network device), refer to the structure shown in FIG. 7.

The network device includes at least one processor 711.

Optionally, the network device may further include at least one network interface 714.

Further, optionally, the network device further includes at least one memory 712, at least one transceiver 713, and one or more antennas 715. The processor 711, the memory 712, and the transceiver 713 are connected to the network interface 714, for example, through a bus. In embodiments of this application, the connection may include various interfaces, transmission lines, buses, or the like. This is not limited in this embodiment. The antenna 715 is connected to the transceiver 713. The network interface 714 is configured to enable the network device to communicate with another communication device through a communication link. For example, the network interface 714 may include a network interface between the network device and a core network device, for example, an S1 interface. The network interface may include a network interface between the network device and another network device (for example, another network device or a core network device), for example, an X2 or an Xn interface.

The processor 711 is mainly configured to process a communication protocol and communication data, control the entire network device, execute a software program, and process data of the software program, for example, configured to support the network device in performing an action described in embodiments. The network device may include a baseband processor and a central processing unit. The baseband processor is mainly configured to process the communication protocol and the communication data. The central processing unit is mainly configured to control the entire terminal device, execute the software program, and process the data of the software program. The processor 711 in FIG. 7 may integrate functions of the baseband processor and the central processing unit. A person skilled in the art may understand that the baseband processor and the central processing unit each may be an independent processor, and are interconnected through a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 712 may exist independently, and is connected to the processor 711. Optionally, the memory 712 may be integrated with the processor 711, for example, integrated into a chip. The memory 712 may store program code for executing the technical solutions in embodiments of this application, and the processor 711 controls execution of the program code. Various types of computer program code that are executed may also be considered as drivers of the processor 711.

FIG. 7 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 713 may be configured to support receiving or sending of a radio frequency signal between the network device and the terminal, and the transceiver 713 may be connected to the antenna 715. The transceiver 713 includes a transmitter Tx and a receiver Rx. Specifically, the one or more antennas 715 may receive a radio frequency signal. The receiver Rx of the transceiver 713 is configured to receive the radio frequency signal from the antenna, convert the radio frequency signal into a digital baseband signal or a digital intermediate frequency signal, and provide the digital baseband signal or the digital intermediate frequency signal to the processor 711, so that the processor 711 performs further processing on the digital baseband signal or the digital intermediate frequency signal, for example, performs demodulation processing and decoding processing. In addition, the transmitter Tx of the transceiver 713 is further configured to receive a modulated digital baseband signal or a modulated digital intermediate frequency signal from the processor 711, convert the modulated digital baseband signal or the digital intermediate frequency signal into a radio frequency signal, and transmit the radio frequency signal through the one or more antennas 715. Specifically, the receiver Rx may selectively perform one or more levels of down-mixing processing and analog-to-digital conversion processing on the radio frequency signal to obtain the digital baseband signal or the digital intermediate frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or digital intermediate frequency signal to obtain the radio frequency signal. A sequence of the up-mixing processing and the digital-to-analog conversion processing is adjustable. The digital baseband signal and the digital intermediate frequency signal may be collectively referred to as a digital signal.

The transceiver may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

It should be noted that the network device shown in FIG. 7 may be specifically configured to implement steps implemented by the network device in the foregoing method embodiments, and implement technical effects corresponding to the network device. For specific implementations of the network device shown in FIG. 7, refer to descriptions in the foregoing method embodiments. Details are not described herein again.

Embodiments of this application further provide a computer-readable storage medium that stores one or more computer-executable instructions. When the computer-executable instructions are executed by a processor, the processor performs the method in the possible implementations of the terminal device in the foregoing embodiments.

Embodiments of this application further provide a computer-readable storage medium that stores one or more computer-executable instructions. When the computer-executable instructions are executed by a processor, the processor performs the method in the possible implementations of the network device in the foregoing embodiments.

Embodiments of this application further provide a computer program product (or referred to as a computer program) that stores one or more computers. When the computer program product is executed by the processor, the processor performs the method in the foregoing possible implementations of the terminal device.

Embodiments of this application further provide a computer program product that stores one or more computers. When the computer program product is executed by the processor, the processor performs the method in the foregoing possible implementations of the network device.

Embodiments of this application further provide a chip system. The chip system includes at least one processor, configured to support a terminal device in implementing functions in the foregoing possible implementations of the terminal device. Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete component.

Embodiments of this application further provide a chip system. The chip system includes at least one processor, configured to support a network device in implementing functions in the foregoing possible implementations of the network device. Optionally, the chip system further includes an interface circuit, and the interface circuit provides program instructions and/or data for the at least one processor. In a possible design, the chip system may further include a memory. The memory is configured to store program instructions and data that are necessary for the network device. The chip system may include a chip, or may include a chip and another discrete component. The network device may be specifically the network device in the foregoing method embodiments.

Embodiments of this application further provide a communication system. A network system architecture includes the terminal device and the network device in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or another form.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of

**EP 4 395 431 A1**

embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of this application essentially, or the part making a contribution, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, comprising:

> receiving first request information from a first device, wherein the first request information is used to request to report a measurement result of a first reference signal;
> measuring the first reference signal transmitted on a first path, to obtain a first measurement result; and
> sending the first measurement result to the first device.

2. The method according to claim 1, wherein the first measurement result is a path power of the first path.

3. The method according to claim 1 or 2, wherein the first measurement result is a power value obtained by performing, based on propagation delay information on the first path, frequency domain compensation processing and averaging processing on channel frequency response information of frequency domain resource information corresponding to the first reference signal.

4. The method according to any one of claims 1 to 3, wherein the measuring the first reference signal transmitted on a first path, to obtain a first measurement result comprises:

> determining the propagation delay information of the first reference signal on the first path;
> determining first channel frequency response information of the frequency domain resource information corresponding to the first reference signal;
> performing frequency domain compensation processing on the first channel frequency response information based on the propagation delay information, to obtain second channel frequency response information; and
> performing averaging processing on the second channel frequency response information to obtain the first measurement result.

5. The method according to claim 3 or 4, wherein the first measurement result satisfies:

$$First\ measurement\ result = \left| \frac{1}{|I|} \sum_{k \in I} H(k)\ exp(2\pi jk f_{scs} D) \right|^2,$$

wherein I represents an index set of resource elements REs occupied by the frequency domain resource information, $|I|$ represents a quantity of elements in the set $I$, $k$ is an index of a resource element RE occupied by the frequency domain resource information, H(k) represents channel frequency response information of the RE whose index value is $k$, j is a complex number unit, $f_{scs}$ is a subcarrier spacing, and $D$ represents the propagation delay information on

27

the first path.

**6.** The method according to claim 3 or 4, wherein the first measurement result satisfies:

$$First\ measurement\ result = \left| \frac{1}{|I|} \sum_{k \in I} H(k)\ exp\left(\frac{2\pi j k D_s}{N}\right) \right|^2 ,$$

wherein $I$ represents an index set of resource elements REs occupied by the frequency domain resource information, $|I|$ represents a quantity of elements in the set $I$, $k$ is an index of a resource element RE occupied by the frequency domain resource information, H(k) represents channel frequency response information of the RE whose index value is $k$, j is a complex number unit, $f_{scs}$ is a subcarrier spacing, $D_s$ represents a time domain sampling point corresponding to the propagation delay information on the first path, and N is a quantity of fast Fourier transform FFT points.

**7.** The method according to any one of claims 1 to 6, wherein
the first reference signal is a reference signal received by a first receiver branch set, the first receiver branch set comprises one or more receiver branches in n receiver branches, and n is an integer greater than 1.

**8.** The method according to claim 7, wherein the first receiver branch set comprises a plurality of receiver branches in the n receiver branches; and

   the first measurement result is an average value of a plurality of measurement results obtained by measuring the first reference signal on the plurality of receiver branches; or
   the first measurement result is an average value obtained by performing spatial filtering on a plurality of measurement results obtained by measuring the first reference signal on the plurality of receiver branches.

**9.** The method according to claim 7, wherein the first receiver branch set comprises a first receiver branch in the n receiver branches, and a quantity of receiver branches comprised in the first receiver branch is 1; and the first receiver branch is a receiver branch corresponding to a largest measurement result in n measurement results obtained by measuring a second reference signal on the n receiver branches.

**10.** The method according to claim 7, wherein the first receiver branch set comprises one receiver branch in the n receiver branches, the one receiver branch has a largest reference signal received power RSRP measurement result in the n receiver branches, and the one receiver branch is a first receiver branch.

**11.** The method according to claim 10, wherein the first measurement result is a path power obtained by measuring, on the first receiver branch, the first reference signal transmitted on the first path.

**12.** The method according to any one of claims 7 to 11, wherein the first measurement result comprises index information of the first receiver branch set.

**13.** The method according to any one of claims 1 to 12, wherein the first request information comprises an identifier of the first path.

**14.** A communication method, comprising:

   sending first request information, wherein the first request information is used to request to report a measurement result of a first reference signal; and
   receiving a first measurement result of the first reference signal transmitted on a first path.

**15.** The method according to claim 14, wherein the first measurement result is a path power of the first path.

**16.** The method according to claim 14 or 15, wherein the first measurement result is a power value obtained by performing, based on propagation delay information on the first path, frequency domain compensation processing and averaging processing on channel frequency response information of frequency domain resource information corresponding to the first reference signal.

**17.** The method according to claim 16, wherein the first measurement result satisfies:

$$First\ measurement\ result = \left|\frac{1}{|I|}\sum_{k\in I} H(k)\,exp(2\pi jk f_{scs}D)\right|^2,$$

wherein $I$ represents an index set of resource elements REs occupied by the frequency domain resource information, $|I|$ represents a quantity of elements in the set $I$, $k$ is an index of a resource element RE occupied by the frequency domain resource information, $H(k)$ represents channel frequency response information of the RE whose index value is $k$, j is a complex number unit, $f_{scs}$ is a subcarrier spacing, and $D$ represents the propagation delay information on the first path.

**18.** The method according to claim 16, wherein the first measurement result satisfies:

$$First\ measurement\ result = \left|\frac{1}{|I|}\sum_{k\in I} H(k)\,exp\left(\frac{2\pi jkD_s}{N}\right)\right|^2,$$

wherein $I$ represents an index set of resource elements REs occupied by the frequency domain resource information, $|I|$ represents a quantity of elements in the set $I$, $k$ is an index of a resource element RE occupied by the frequency domain resource information, $H(k)$ represents channel frequency response information of the RE whose index value is $k$, j is a complex number unit, $f_{scs}$ is a subcarrier spacing, $D_s$ represents a time domain sampling point corresponding to the propagation delay information on the first path, and N is a quantity of fast Fourier transform FFT points.

**19.** The method according to any one of claims 14 to 18, wherein the first reference signal is a reference signal received by a first receiver branch set, the first receiver branch set comprises one or more receiver branches in n receiver branches, and n is an integer greater than 1.

**20.** The method according to claim 19, wherein the first receiver branch set comprises a plurality of receiver branches in the n receiver branches; and

the first measurement result is an average value of a plurality of measurement results obtained by measuring the first reference signal on the plurality of receiver branches; or
the first measurement result is an average value obtained by performing spatial filtering on a plurality of measurement results obtained by measuring the first reference signal on the plurality of receiver branches.

**21.** The method according to claim 19, wherein the first receiver branch set comprises a first receiver branch in the n receiver branches, and a quantity of receiver branches comprised in the first receiver branch is 1; and the first receiver branch is a receiver branch corresponding to a largest measurement result in n measurement results obtained by measuring a second reference signal on the n receiver branches.

**22.** The method according to claim 19, wherein the first receiver branch set comprises one receiver branch in the n receiver branches, the one receiver branch has a largest reference signal received power RSRP measurement result in the n receiver branches, and the one receiver branch is a first receiver branch.

**23.** The method according to claim 22, wherein the first measurement result is a path power obtained by measuring, on the first receiver branch, the first reference signal transmitted on the first path.

**24.** The method according to any one of claims 19 to 23, wherein the first measurement result comprises index information of the first receiver branch set.

**25.** The method according to any one of claims 14 to 24, wherein the first request information comprises an identifier of the first path.

**26.** A communication apparatus, wherein the apparatus comprises a transceiver unit and a processing unit, wherein

the transceiver unit is configured to receive first request information from a first device, wherein the first request information is used to request to report a measurement result of a first reference signal;
the processing unit is configured to measure the first reference signal transmitted on a first path, to obtain a first measurement result; and
the transceiver unit is further configured to send the first measurement result to the first device.

27. The apparatus according to claim 26, wherein the first measurement result is a path power of the first path.

28. The apparatus according to claim 26 or 27, wherein the first measurement result is a power value obtained by performing, based on propagation delay information on the first path, frequency domain compensation processing and averaging processing on channel frequency response information of frequency domain resource information corresponding to the first reference signal.

29. The apparatus according to any one of claims 26 to 28, wherein the processing unit is specifically configured to:

determine the propagation delay information of the first reference signal on the first path;
determine first channel frequency response information of the frequency domain resource information corresponding to the first reference signal;
perform frequency domain compensation processing on the first channel frequency response information based on the propagation delay information, to obtain second channel frequency response information; and
perform averaging processing on the second channel frequency response information to obtain the first measurement result.

30. The apparatus according to claim 28 or 29, wherein the first measurement result satisfies:

$$\text{First measurement result} = \left| \frac{1}{|I|} \sum_{k \in I} H(k) \exp(2\pi jkf_{scs}D) \right|^2,$$

wherein I represents an index set of resource elements REs occupied by the frequency domain resource information, |I| represents a quantity of elements in the set I, k is an index of a resource element RE occupied by the frequency domain resource information, H(k) represents channel frequency response information of the RE whose index value is k, j is a complex number unit, $f_{scs}$ is a subcarrier spacing, and D represents the propagation delay information on the first path.

31. The apparatus according to claim 28 or 29, wherein the first measurement result satisfies:

$$\text{First measurement result} = \left| \frac{1}{|I|} \sum_{k \in I} H(k) \exp\left( \frac{2\pi jkD_s}{N} \right) \right|^2,$$

wherein I represents an index set of resource elements REs occupied by the frequency domain resource information, |I| represents a quantity of elements in the set I, k is an index of a resource element RE occupied by the frequency domain resource information, H(k) represents channel frequency response information of the RE whose index value is k, j is a complex number unit, $f_{scs}$ is a subcarrier spacing, $D_s$ represents a time domain sampling point corresponding to the propagation delay information on the first path, and N is a quantity of fast Fourier transform FFT points.

32. The apparatus according to any one of claims 26 to 31, wherein
the first reference signal is a reference signal received by a first receiver branch set, the first receiver branch set comprises one or more receiver branches in n receiver branches, and n is an integer greater than 1.

33. The apparatus according to claim 32, wherein the first receiver branch set comprises a plurality of receiver branches in the n receiver branches; and

the first measurement result is an average value of a plurality of measurement results obtained by measuring the first reference signal on the plurality of receiver branches; or

the first measurement result is an average value obtained by performing spatial filtering on a plurality of measurement results obtained by measuring the first reference signal on the plurality of receiver branches.

**34.** The apparatus according to claim 32, wherein the first receiver branch set comprises a first receiver branch in the n receiver branches, and a quantity of receiver branches comprised in the first receiver branch is 1; and the first receiver branch is a receiver branch corresponding to a largest measurement result in n measurement results obtained by measuring a second reference signal on the n receiver branches.

**35.** The apparatus according to claim 32, wherein the first receiver branch set comprises one receiver branch in the n receiver branches, the one receiver branch has a largest reference signal received power RSRP measurement result in the n receiver branches, and the one receiver branch is a first receiver branch.

**36.** The apparatus according to claim 35, wherein the first measurement result is a path power obtained by measuring, on the first receiver branch, the first reference signal transmitted on the first path.

**37.** The apparatus according to any one of claims 32 to 36, wherein the first measurement result comprises index information of the first receiver branch set.

**38.** The apparatus according to any one of claims 26 to 37, wherein the first request information comprises an identifier of the first path.

**39.** A communication apparatus, wherein the apparatus comprises a sending unit and a receiving unit, wherein

the sending unit is configured to send first request information, wherein the first request information is used to request to report a measurement result of a first reference signal; and
the receiving unit is configured to receive a first measurement result of the first reference signal transmitted on a first path.

**40.** The apparatus according to claim 39, wherein the first measurement result is a path power of the first path.

**41.** The apparatus according to claim 39 or 40, wherein the first measurement result is a power value obtained by performing, based on propagation delay information on the first path, frequency domain compensation processing and averaging processing on channel frequency response information of frequency domain resource information corresponding to the first reference signal.

**42.** The apparatus according to claim 41, wherein the first measurement result satisfies:

$$\text{First measurement result} = \left| \frac{1}{|I|} \sum_{k \in I} H(k) \exp(2\pi j k f_{scs} D) \right|^2,$$

wherein I represents an index set of resource elements REs occupied by the frequency domain resource information, |I| represents a quantity of elements in the set I, k is an index of a resource element RE occupied by the frequency domain resource information, H(k) represents channel frequency response information of the RE whose index value is k, j is a complex number unit, $f_{scs}$ is a subcarrier spacing, and D represents the propagation delay information on the first path.

**43.** The apparatus according to claim 41, wherein the first measurement result satisfies:

$$\text{First measurement result} = \left| \frac{1}{|I|} \sum_{k \in I} H(k) \exp\left(\frac{2\pi j k D_s}{N}\right) \right|^2,$$

wherein I represents an index set of resource elements REs occupied by the frequency domain resource information, |I| represents a quantity of elements in the set I, k is an index of a resource element RE occupied by the frequency domain resource information, H(k) represents channel frequency response information of the RE whose index value is k, j is a complex number unit, $f_{scs}$ is a subcarrier spacing, $D_s$ represents a time domain sampling point corresponding to the propagation delay information on the first path, and N is a quantity of fast Fourier transform FFT points.

44. The apparatus according to any one of claims 39 to 43, wherein the first reference signal is a reference signal received by a first receiver branch set, the first receiver branch set comprises one or more receiver branches in n receiver branches, and n is an integer greater than 1.

45. The apparatus according to claim 44, wherein the first receiver branch set comprises a plurality of receiver branches in the n receiver branches; and

   the first measurement result is an average value of a plurality of measurement results obtained by measuring the first reference signal on the plurality of receiver branches; or
   the first measurement result is an average value obtained by performing spatial filtering on a plurality of measurement results obtained by measuring the first reference signal on the plurality of receiver branches.

46. The apparatus according to claim 44, wherein the first receiver branch set comprises a first receiver branch in the n receiver branches, and a quantity of receiver branches comprised in the first receiver branch is 1; and the first receiver branch is a receiver branch corresponding to a largest measurement result in n measurement results obtained by measuring a second reference signal on the n receiver branches.

47. The apparatus according to claim 44, wherein the first receiver branch set comprises one receiver branch in the n receiver branches, the one receiver branch has a largest reference signal received power RSRP measurement result in the n receiver branches, and the one receiver branch is a first receiver branch.

48. The apparatus according to claim 47, wherein the first measurement result is a path power obtained by measuring, on the first receiver branch, the first reference signal transmitted on the first path.

49. The apparatus according to any one of claims 44 to 48, wherein the first measurement result comprises index information of the first receiver branch set.

50. The apparatus according to any one of claims 39 to 49, wherein the first request information comprises an identifier of the first path.

51. A communication apparatus, wherein the communication apparatus comprises:

   a memory, configured to store computer instructions; and
   a processor, configured to execute a computer program or the computer instructions stored in the memory, to enable the communication apparatus to perform the method according to any one of claims 1 to 13, or to enable the communication apparatus to perform the method according to any one of claims 14 to 25.

52. A communication apparatus, wherein the communication apparatus comprises:
   a processor, configured to perform the method according to any one of claims 1 to 13, or configured to perform the method according to any one of claims 14 to 25.

53. A computer-readable storage medium, wherein the medium stores instructions, and when the instructions are executed by a computer, the method according to any one of claims 1 to 25 is implemented.

FIG. 1

FIG. 2a

Core network
device

Communication
apparatus

S100: First configuration
information

S101: First request information

S102: Measure a first reference signal transmitted
on a first path, to obtain a first measurement result

S103: First measurement result

FIG. 2b

Direction
of arrival

Receiver branch 1
Receiver branch 2
Receiver branch 3
Receiver branch 4
Receiver branch 5
Receiver branch 6
Receiver branch 7
Receiver branch 8

θ

FIG. 3

400

## Communication apparatus

401

Transceiver unit

402

Processing unit

FIG. 4

500

## Communication apparatus

501

Sending unit

502

Receiving unit

FIG. 5

## Communication apparatus 600

601

Processor

603

Memory

Transceiver

602

Radio frequency circuit

Antenna

FIG. 6

FIG. 7

## INTERNATIONAL SEARCH REPORT

| International application No. |
|---|
| **PCT/CN2022/119854** |

**A. CLASSIFICATION OF SUBJECT MATTER**

H04W 64/00(2009.01)i

According to International Patent Classification (IPC) or to both national classification and IPC

**B. FIELDS SEARCHED**

Minimum documentation searched (classification system followed by classification symbols)

H04W64/-

Documentation searched other than minimum documentation to the extent that such documents are included in the fields searched

Electronic data base consulted during the international search (name of data base and, where practicable, search terms used)

CNABS; CNTXT; CNKI: 参考信号, 功率, 测量, 径, LMF, 定位, RSRP, RSRQ, 频率响应, 频响, 时延, RS, SL, 侧行链路, RE DWPI; WPABS; WOTXT; EPTXT; USTXT; 3GPP: RS, RSRP, RSRQ, locate, LMF, frequency response, delay, sidelink, SL, reference signal, RE, multipath, index

**C. DOCUMENTS CONSIDERED TO BE RELEVANT**

| Category* | Citation of document, with indication, where appropriate, of the relevant passages | Relevant to claim No. |
|---|---|---|
| PX | CN 114697903 A (VIVO COMMUNICATION TECHNOLOGY CO., LTD.) 01 July 2022 (2022-07-01) claims 1-44 | 1-53 |
| X | CN 113114439 A (HUAWEI TECHNOLOGIES CO., LTD.) 13 July 2021 (2021-07-13) description, paragraph [0006]-paragraph [0034] | 1-53 |
| A | CN 109151885 A (HUAWEI TECHNOLOGIES CO., LTD.) 04 January 2019 (2019-01-04) entire document | 1-53 |
| A | US 2020267681 A1 (QUALCOMM INC.) 20 August 2020 (2020-08-20) entire document | 1-53 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 November 2022** | **16 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/119854**

| Patent document cited in search report | | | Publication date (day/month/year) | Patent family member(s) | | | Publication date (day/month/year) |
|---|---|---|---|---|---|---|---|
| CN | 114697903 | A | 01 July 2022 | WO | 2022143863 | A1 | 07 July 2022 |
| CN | 113114439 | A | 13 July 2021 | WO | 2020192341 | A1 | 01 October 2020 |
| | | | | CN | 111756494 | A | 09 October 2020 |
| | | | | EP | 3937558 | A1 | 12 January 2022 |
| | | | | US | 2022015060 | A1 | 13 January 2022 |
| | | | | EP | 3937558 | A4 | 27 April 2022 |
| | | | | CN | 113114439 | B | 24 June 2022 |
| CN | 109151885 | A | 04 January 2019 | EP | 3562201 | A1 | 30 October 2019 |
| | | | | ES | 2910053 | T3 | 11 May 2022 |
| | | | | BR | 112019012989 | A2 | 03 December 2019 |
| | | | | CA | 3047498 | A1 | 20 December 2018 |
| | | | | US | 2019327719 | A1 | 24 October 2019 |
| | | | | CN | 109905224 | A | 18 June 2019 |
| | | | | CN | 110446226 | A | 12 November 2019 |
| | | | | EP | 4075683 | A1 | 19 October 2022 |
| | | | | JP | 2020507970 | A | 12 March 2020 |
| | | | | US | 2022061038 | A1 | 24 February 2022 |
| | | | | CN | 110754108 | A | 04 February 2020 |
| | | | | WO | 2018228535 | A1 | 20 December 2018 |
| | | | | EP | 3562201 | A4 | 26 February 2020 |
| | | | | CN | 109905224 | B | 26 June 2020 |
| | | | | CN | 110446226 | B | 23 March 2021 |
| | | | | US | 11184887 | B2 | 23 November 2021 |
| | | | | JP | 6972142 | B2 | 24 November 2021 |
| | | | | CN | 110754108 | B | 30 November 2021 |
| | | | | EP | 3562201 | B1 | 09 March 2022 |
| US | 2020267681 | A1 | 20 August 2020 | WO | 2020171928 | A1 | 27 August 2020 |
| | | | | CN | 113454478 | A | 28 September 2021 |
| | | | | EP | 3928117 | A1 | 29 December 2021 |

Form PCT/ISA/210 (patent family annex) (January 2015)

**REFERENCES CITED IN THE DESCRIPTION**

**Patent documents cited in the description**

- CN 202111155753